(19) Europäisches Patentamt
European Patent Office
Office européen des brevets

(11) **EP 3 096 465 B1**

(12) **EUROPEAN PATENT SPECIFICATION**

(45) Date of publication and mention
of the grant of the patent:
**04.03.2020 Bulletin 2020/10**

(51) Int Cl.:
***H04B 7/0417*** *(2017.01)*   ***H04L 5/00*** *(2006.01)*
***H04L 27/00*** *(2006.01)*   ***H04B 7/06*** *(2006.01)*
***H04L 27/20*** *(2006.01)*

(21) Application number: **14879595.8**

(22) Date of filing: **21.01.2014**

(86) International application number:
**PCT/CN2014/071018**

(87) International publication number:
**WO 2015/109444 (30.07.2015 Gazette 2015/30)**

(54) **MULTI-INPUT MULTI-OUTPUT (MIMO) TRANSMISSION METHODS, SYSTEM AND DEVICE**

MIMO-ÜBERTRAGUNGSVERFAHREN, SYSTEM UND VORRICHTUNG

PROCÉDÉS, SYSTÈME ET DISPOSITIF DE TRANSMISSION À ENTRÉES MULTIPLES SORTIES MULTIPLES (MIMO)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2016 Bulletin 2016/47**

(73) Proprietor: **Huawei Technologies Co., Ltd.**
**Longgang District**
**Shenzhen, Guangdong 518129 (CN)**

(72) Inventors:
• **WU, Tao**
**Shenzhen**
**Guangdong 518129 (CN)**
• **LU, Weishan**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
WO-A1-2014/003384    CN-A- 1 943 152
CN-A- 102 447 500    CN-A- 102 932 112
US-A1- 2010 272 204    US-A1- 2013 095 774
US-B2- 7 693 032

• **DAVID GONZALEZ ET AL: "Performance of a reconfigurable antenna configuration selection scheme in a MIMO-OFDM system with modulation rate adaptation", MODELING AND OPTIMIZATION IN MOBILE, AD HOC AND WIRELESS NETWORKS (WIOPT), 2011 INTERNATIONAL SYMPOSIUM ON, IEEE, 9 May 2011 (2011-05-09), pages 307-313, XP031949734, DOI: 10.1109/WIOPT.2011.5930032 ISBN: 978-1-61284-822-8**

## Description

## TECHNICAL FIELD

Embodiments of the present invention relate to the communications field, and in particular, to a multiple-input multiple-output MIMO transmission method and system, and a device.

## BACKGROUND

As an important part of a communications system, development of antennas effectively promotes development of technologies in the entire communications field. A reconfigurable antenna is a type of antenna, and the reconfigurable antenna selects different transmit states by configuring different parameters of the antenna, to obtain different antenna gains. As an important application of the reconfigurable antenna, the reconfigurable antenna and a multiple-input multiple-output (Multiple-Input Multiple-Output, MIMO) technology may be combined to form a reconfigurable MIMO technology. That is, there are at least two reconfigurable antennas, and at least two different streams are transmitted or received by using different transmit or receive modes. In this way, a transmitter or a receiver including at least two of such reconfigurable antennas may transmit or receive a signal by using combinations of states of the reconfigurable antennas, and different combinations of states correspond to different transmission and reception effects.

The greatest advantage of the reconfigurable antenna is that the reconfigurable antenna may adaptively select the most appropriate transmit and receive states of the antenna according to a channel state change, thereby obtaining the most desirable transmission and reception effects. Because the reconfigurable antenna has many selectable states, how to obtain an optimal state with a minimum quantity of state attempts becomes an issue that must be resolved to exploit advantages of the reconfigurable antenna. Especially, in reconfigurable MIMO, each reconfigurable antenna has multiple choices, and a total quantity of combinations of the reconfigurable antennas increases exponentially as a quantity of the antennas increases. How to obtain an optimal combination of transmit states with a minimum quantity of state attempts becomes an issue to be resolved urgently.

From the contribution DAVID GONZALEZ ET AL: "Performance of a reconfigurable antenna configuration selection scheme in a MIMO-OFDM system with modulation rate adaptation", MODELING AND OPTIMIZATION IN MOBILE, AD HOC AND WIRELESS NETWORKS (WIOPT), 2011 INTERNATIONAL SYMPOSIUM ON, IEEE, 9 May 2011 (2011-05-09), pages 307-313 test setups and details of a selection algorithm for configuring a MIMO system with reconfigurable antennas are known.

From US 7,693,032 B2 methods and apparatuses for multi-carrier communication systems with adaptive transmission are known.

From US 2010/0272204 A1 MIMO communication systems with reconfigurable antennas are known.

From WO 2014/003384 A1 methods and apparatuses for reporting channel state information in wireless communication systems are known. Channel state information is obtained using a reference signal.

## SUMMARY

MIMO transmission methods applicable to a transmitter and to a receiver and a MIMO system and a MIMO receiver according to the independent claims are provided. Dependent claims provide preferred embodiments. In the following, embodiments not falling within the scope of the claims should be understood as examples useful for understanding the invention.

Embodiments of the present invention provide a MIMO transmission method and system, and a device, which can obtain an optimal combination of states of at least two antennas with a minimum quantity of state attempts, thereby improving efficiency of utilizing a pilot signal.

According to the MIMO transmission method and system, and the device that are provided in the embodiments of the present invention, a transmitter of MIMO transmission includes: at least two first antennas performing transmission by using MIMO, each configured to send, on a specified resource location, a pilot signal and specified state information and a pilot location that correspond to the pilot signal to a receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and a processor, configured to correspondingly adjust a state of each first antenna according to a state of each first antenna that is indicated by the antenna state set, so that each first antenna sends a data packet to the receiver according to the state in the optimal antenna state set. In this way, a transmitter may send, on a specified resource location, pilot signals according to specified states, so that a receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic structural diagram of an embodiment of a transmitter according to the present invention;
FIG. 2 is a schematic structural diagram of an embodiment of a receiver according to the present invention;
FIG. 3a is a schematic search diagram of obtaining a maximum channel capacity through traversal;
FIG. 3b is a schematic search diagram of obtaining a maximum channel capacity through calculation according to specified states;
FIG. 4 is a schematic flowchart of an embodiment of a MIMO transmission method according to the present invention;
FIG. 5 is a schematic flowchart of another embodiment of a MIMO transmission method according to the present invention;
FIG. 6 is a schematic structural diagram of another embodiment of a transmitter according to the present invention;
FIG. 7 is a schematic structural diagram of another embodiment of a receiver according to the present invention; and
FIG. 8 is a schematic structural diagram of an embodiment of a MIMO transmission system according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

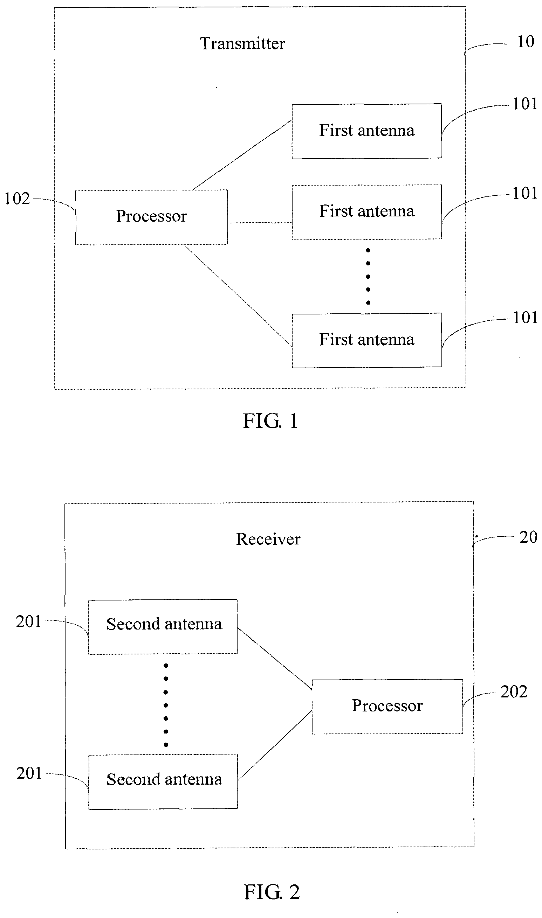

FIG. 1 is a schematic structural diagram of an embodiment of a transmitter according to the present invention. As shown in FIG. 1, the transmitter 10 includes: at least two first antennas 101 performing transmission by using MIMO, and a processor 102.

The at least two first antennas 101 performing transmission by using MIMO each is configured to send, on a specified resource location, a pilot signal and specified state information and a pilot location that correspond to the pilot signal to a receiver according to a respective specified state, so that the receiver determines, according to the specified state information and the pilot location, an antenna state set corresponding to a maximum channel capacity or an optimal antenna state set corresponding to a maximum signal-to-noise ratio, where the antenna state set is used to indicate a state of each first antenna.

It should be noted that the first antenna 101 is a reconfigurable antenna, and the first antennas 101 may send signals in a same mode or may send signals in different modes. Different effects may be achieved by choosing different combinations. The greatest advantage of the reconfigurable antenna is that the reconfigurable antenna may adaptively select an optimal antenna state according to a channel state change, thereby obtaining most desirable transmission and reception effects. In a reconfigurable MIMO state, if M first antennas 101 are disposed in the transmitter, and each first antenna 101 has N implementable states, there are $M^N$ available state configuration manners for the first antennas 101 in the transmitter 10. A large quantity of attempts are needed if state attempts are made by traversing the $M^N$ state configuration manners to acquire an optimal combination manner of the M first antennas 101. When transmission is performed in a combination manner of the M first antennas 101 that is not the optimal, transmit efficiency of a pilot signal is low, and pilot resources are wasted.

For example, the first antennas 101 being each configured to send, on a specified resource location, a pilot signal and specified state information and a pilot location that correspond to the pilot signal to a receiver according to a respective specified state may be:
sending, by each first antenna 101 on a specified resource location of a pilot channel, the pilot signal to the receiver according to the respective specified state, where the pilot channel is a channel for transmitting a reconfigurable MIMO setting. One frame A used for communication includes at least three channels: a common channel a, a dedicated channel b, and a pilot channel c (which may also be referred to as a sounding Sounding channel). The common channel is mainly used for carrying system information, and includes a common pilot mainly used to demodulate the system information. The dedicated channel is mainly used for transmitting data of a given user, and the dedicated channel includes a dedicated pilot, used to assist the demodulation. The pilot channel is mainly used for transmitting pilot information of the first antenna 101 in different states, which may be specifically multiplexing pilot signals to be sent into a same pilot channel by means of time division, frequency division, or code division. A resource location occupied by the pilot channel may also coincide with a resource location occupied by a pilot in the common channel. Further, the specified state information and the pilot location that correspond to the pilot signal may also be sent on a pilot channel corresponding to the dedicated channel.

The processor of the transmitter 10 may first perform a resource configuration, and configure, by using system information, a quantity of different states, of different first antennas 101, carried in the pilot channel, and the pilot signal and the specified state information and the pilot location that are of the first antenna 101 and that correspond to the pilot signal, where the pilot signal is sent by each first antenna and is carried in the pilot channel in a current frame. The specified state information of the first antenna 101 is information corresponding to the specified state of the first antenna 101, which can describe what state the specified state is, for example, a deviation angle relative to a horizontal plane. The specified state is a state that is selected by the transmitter from multiple states in which the first antenna 101 can send data, and may be selected according to a history sending record or may be randomly selected. The specified states of the first antennas 10 may be the same, or may be different.

In addition, if this pilot channel is not added to the frame, the first antennas 101 may each send, on a specified resource location of the common pilot of the common channel, the pilot signal to the receiver according to the respective specified state, or each send, on a specified resource location of the dedicated pilot on the dedicated channel, the pilot signal to the receiver according to the respective specified state, where an initial state of the specified state of each first antenna 101 may be a randomly selected state or a history state of the first antenna.

The first antennas 101 each is further configured to receive the optimal antenna state set that corresponds to the maximum channel capacity or the maximum signal-to-noise ratio and that is fed back by the receiver.

It should be noted that because each time each first antenna 101 sends, according to one specified state, a pilot signal and specified state information and a pilot location that correspond to the pilot signal, a channel capacity or a signal-to-noise ratio that is obtained by the receiver according to the foregoing information of a group of first antennas 101 that is sent at each time should correspond to states of the first antennas 101. The antenna state set that corresponds to the maximum channel capacity or the maximum signal-to-noise ratio and that is fed back by the receiver also indicates one specified state of one group of first antennas 101.

The processor 102 is configured to correspondingly adjust a state of each first antenna according to the state of each first antenna that is indicated by the optimal antenna state set, so that each first antenna sends a data packet to the receiver according to the state in the optimal antenna state set.

It should be noted that the processor 102 may adjust a state of each first antenna 101 to be consistent with a corresponding specified state in the antenna state set, so that the first antennas 101 each sends, in the specified state corresponding to the first antenna 101, a data packet to the receiver by using a dedicated channel.

Further, the first antennas 101 each may further send, on the specified resource location, the pilot signal and a sequence number to the receiver according to the respective specified state, where the sequence number is a sequence number combined from the specified state information and the pilot location that correspond to each pilot signal. In this case, both the transmitter and the receiver prestore the sequence number combined from the specified state information and the pilot location that correspond to each pilot signal. For example, when specified state information of the first first antenna 101 of the two are coordinates (a, b, c), a pilot location is a top of the transmitter, coordinates of the second first antenna are (m, i, h), and a pilot location is a bottom of the transmitter, a sequence number is 01.

The transmitter of MIMO transmission provided in this embodiment of the present invention includes: the at least two first antennas performing transmission by using MIMO, each configured to send, on a specified resource location, a pilot signal and specified state information and a pilot location that correspond to the pilot signal to the receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and the processor, configured to correspondingly adjust a state of each first antenna according to a state of each first antenna that is indicated by the antenna state set, so that each first antenna sends a data packet to the receiver according to the state in the optimal antenna state set. In this way, the transmitter may send, on a specified resource location, pilot signals according to specified states, so that the receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

FIG. 2 is a schematic structural diagram of an embodiment of a receiver according to the present invention. As shown in FIG. 2, the receiver 20 includes: at least two second antennas 201 performing transmission by using MIMO, and a processor 202.

The at least two second antennas 201 performing transmission by using MIMO each is configured to receive a pilot signal and specified state information and a pilot location that are of a first antenna and that correspond to the pilot signal, where the pilot signal, the specified state information, and the pilot location are sent on a specified resource location by each first antenna in a specified state.

It should be noted that a transmitter and the receiver 20 agree in advance on a specified resource location on which the pilot signal, and the specified state information and the pilot location that are of the first antenna and that correspond to the pilot signal are sent. If the first antenna sends the pilot signal, the specified state information, and the pilot location on a specified resource location corresponding to a pilot channel, the second antenna 201 also receives the pilot signal, the specified state information, and the pilot location at the same location, that is, receives the pilot signal, the specified state information, and the pilot location on the specified resource location corresponding to the pilot channel; or similarly, if the first antenna sends the pilot signal, the specified state information, and the pilot location on a resource location corresponding to a common pilot channel of a common channel, the second antenna 201 receives the pilot signal, the specified state information, and the pilot location on the resource location corresponding to the common pilot channel of the common channel; or if the first antenna sends the pilot signal, the specified state information, and the pilot location on a resource location corresponding to a common pilot channel of a common channel, the second antenna 201 receives the pilot signal, the specified state information, and the pilot location on the resource location corresponding to the common pilot channel of the common channel.

Further, if the first antenna sends a sequence number, where as described in the foregoing embodiment, the sequence number is a sequence number combined from the specified state information and the pilot location that correspond to each pilot signal, a mapping list prestored by the receiver 20 is searched according to the sequence number, that is, the receiver prestores the mapping list of the sequence number combined from the specified state information and the pilot location that correspond to each pilot signal. For example, the received sequence number may be 01. When it is determined that coordinates of the first first antenna are (a, b, c), and a pilot location is a top of the transmitter, coordinates of the second first antenna are (m, i, h), and a pilot location is a bottom of the transmitter.

The processor 202 is configured to calculate a channel capacity or a signal-to-noise ratio according to the received specified state information and pilot location that are of the first antenna and that correspond to each pilot signal, to obtain an antenna state set corresponding to a maximum channel capacity or an optimal antenna state set corresponding to a maximum signal-to-noise ratio, where the antenna state set is used to indicate a state of each first antenna. The processor 202 is further configured to: before calculating the channel capacity or the signal-to-noise ratio, store specified state information and a pilot location that are received each time, that are of the first antenna, and that correspond to each pilot signal as a group, until a quantity Q of the different groups is greater than or equal to L, where $L=M^N$, M is a quantity of the first antennas, and N is a quantity of the specified state information and the pilot locations that correspond to each first antenna. For example, when M=2 and N=3, the processor 202 calculates channel capacities or the signal-to-noise ratios only after receiving 6 different groups of specified state information and pilot locations that are of the first antennas and that correspond to the pilot signals.

Further, the processor 202 may calculate a channel capacity by using specified state information and a pilot location that are of each first antenna in a same specified state, and determine an obtained channel capacity having the maximum value as a first channel capacity, where an antenna state corresponding to the first channel capacity is a first specified state; then by using the first specified state as a state of a first first antenna, traverse information about all other first antennas in states, calculate channel capacities, and determine an obtained channel capacity having the maximum value as a second channel capacity; then by using the first specified state as a state of a second first antenna, traverse information about all other first antennas in states, calculate channel capacities, and determine an obtained channel capacity having the maximum value as a third channel capacity; and perform a similar process until an $M^{th}$ channel capacity is obtained, select states that correspond to the first antennas when a channel capacity is maximum in M channel capacities to form the optimal antenna state set, where M is a quantity of the first antennas, and M is an integer greater than 1.

For example, there are M first antennas, where M is an integer greater than or equal to 2, and each first antenna has N transmit modes, which are separately represented as $S_{mn}$, where m=1, 2, 3,..., N. If an optimal combination is acquired by traversing all manners, $M^N$ times of search needs to be performed, which consumes a large quantity of system resources. However, in the channel capacity calculation method provided in this embodiment, only N+M(N-1) times of search needs to be performed, which reduces consumption of system resources.

For example, a case in which there are two first antennas, and the transmitter and the receiver prestore a sequence number corresponding to each state of each first antenna is used as an example for description. Each of the first first antenna and the second first antenna sends a signal in a same mode, that is, in a same state, which may be represented as $S_{1n} = S_{2n}$. The processor 202 performs N times of traversal and calculates channel capacities corresponding to the N times of traversal, and selects a maximum capacity $C_0$ and a corresponding sequence number $\hat{N}$. The same mode of the first first antenna and the second first antenna is recorded as a first mode. The processor 202 performs calculation by looping all other different modes of the first antenna when a mode of the second antenna mode is the first mode, where the example herein is to loop the second first antenna in different modes by $S_{1n}$, n=1, 2, ... N times, to obtain a maximum capacity $C_1$ and a corresponding sequence number $\hat{N}_1$; and then performs calculation by looping the different modes of the second first antenna by $S_{2n}$, n=1,2, ... N times when a mode of first antenna is the first mode, to obtain a maximum capacity $C_2$ and a corresponding sequence number $\hat{N}_2$.

The channel capacity is calculated in the following manner:

$$C = \log_2 \det\left(\mathsf{I}_N + \frac{1}{M\sigma^2} \mathsf{H}^H \mathsf{H}\right)$$

where det means acquiring a value of a determinant, $\mathsf{I}_N$ is a diagonal matrix of order N, $\sigma^2$ is a noise power, H is a channel obtained by means of channel estimation, and $\mathsf{H}^H$ is a conjugate transpose of the channel obtained by means of channel estimation.

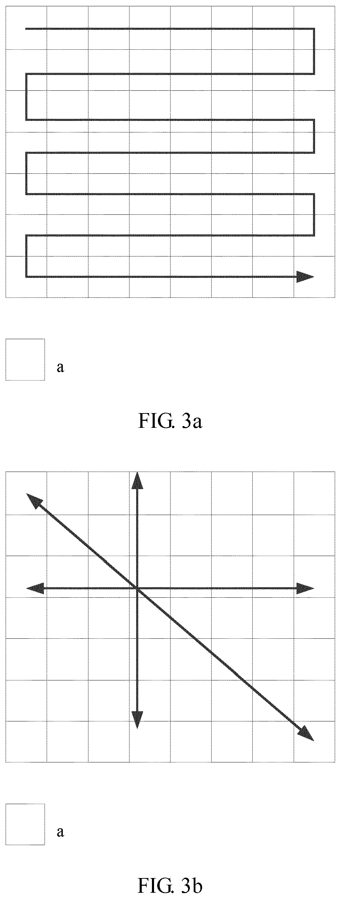

The processor 202 compares $C_0$, $C_1$, and $C_2$ that are obtained through calculation, and selects a maximum channel capacity. FIG. 3a is a schematic search diagram of obtaining a maximum channel capacity through traversal. FIG. 3a shows a case in which traversal needs to be performed when there are two first antennas. A line with an arrow in FIG. 3a means traversing grids a, where each grid represents a combination manner of different states of the first antennas. FIG. 3b is a schematic search diagram of obtaining a maximum channel capacity through calculation according to specified states. FIG. 3b shows a case in which an antenna state needs to be tried according to the foregoing calculation method when there are two first antennas. A line with an arrow in FIG. 3b represents some grids that need to be tried according to the foregoing algorithm, where each grid represents a combination manner of different states of the first antennas. Compared FIG. 3a with FIG. 3b, as shown in FIG. 3a, a method for traversing all possible combination manner to obtain the maximum channel capacity needs $M^N$ times of search; and as shown in FIG. 3b, a method for obtaining the maximum channel capacity according to a specified state calculation method needs to perform only N+M (N-1) times of search, which greatly reduces consumption of system resources that is caused by traversal.

It should be noted that the foregoing example is described by using a case in which there are only two first antennas, and a method for obtaining a maximum channel capacity by analogy with the foregoing method when there are M first antennas falls within the protection scope.

In addition to the foregoing method for obtaining a maximum channel capacity by using a channel capacity method, a signal-to-noise ratio may be calculated by using specified state information and a pilot location that are of each first antenna in a same specified state, and an obtained signal-to-noise ratio having the maximum value is determined as a first signal-to-noise ratio, where an antenna state corresponding to the first signal-to-noise ratio is a first specified state; by using the first specified state as a state of a first first antenna, information about all other first antennas in states is traversed, signal-to-noise ratios are calculated, and an obtained signal-to-noise ratio having the maximum value is determined as a second signal-to-noise ratio; by using the first specified state as a state of a second first antenna, information about all other first antennas in states is traversed, signal-to-noise ratios are calculated, and an obtained signal-to-noise ratio having the maximum value is determined as a third signal-to-noise ratio; and a similar process is performed until an $M^{th}$ signal-to-noise ratio is obtained, and states that correspond to the first antennas when a signal-to-noise ratio is maximum in M signal-to-noise ratios are selected to form the optimal antenna state set, where M is a quantity of the first antennas, and M is an integer greater than 1.

Further, after a period of time after the processor 202 obtains the maximum channel capacity or the maximum signal-to-noise ratio, the processor 202 recalculates a maximum channel capacity or a maximum signal-to-noise ratio according to received specified state information of specified states and received pilot locations of each group of first antennas, feeds back, to the transmitter, specified state information of specified states and pilot locations of a group of first antennas to which a newly obtained maximum channel capacity or maximum signal-to-noise ratio belongs, or a sequence number of pilot locations and of specified state information of specified states of a group of first antennas to which a newly obtained maximum channel capacity or maximum signal-to-noise ratio belongs, so that the transmitter repeatedly iterates, so as to send, on the dedicated channel, a data packet to the receiver according to the specified state corresponding to the maximum channel capacity or the maximum signal-to-noise ratio.

The second antennas 201 each is further configured to feed back the obtained optimal antenna state set to the transmitter, so that the transmitter correspondingly adjusts a state of each first antenna according to the state of each first antenna that is indicated by the optimal antenna state set.

According to the device provided in this embodiment of the present invention, a transmitter of MIMO transmission includes: at least two first antennas performing transmission by using MIMO, each configured to send, on a specified resource location, a pilot signal

and specified state information and a pilot location that correspond to the pilot signal to the receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and the processor, configured to correspondingly adjust a state of each first antenna according to a state of each first antenna that is indicated by the antenna state set, so that each first antenna sends a data packet to the receiver according to the state in the optimal antenna state set. In this way, the transmitter may send, on a specified resource location, pilot signals according to specified states, so that the receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

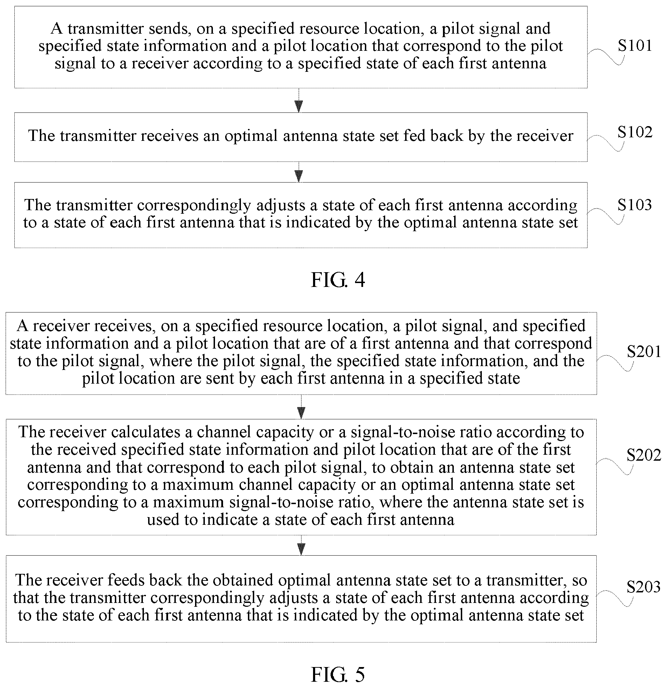

FIG. 4 is a schematic flowchart of an embodiment of a MIMO transmission method according to the present invention. The method is applicable to a transmitter that includes at least two first antennas performing transmission by using MIMO. As shown in FIG. 4, the transmission method includes:

S101: A transmitter sends, on a specified resource location, a pilot signal and specified state information and a pilot location that correspond to the pilot signal to a receiver according to a specified state of each first antenna, so that the receiver determines, according to the specified state information and the pilot location, an antenna state set corresponding to a maximum channel capacity or an optimal antenna state set corresponding to a maximum signal-to-noise ratio, where the antenna state set is used to indicate a state of each first antenna.

Further, the transmitter may send, on the specified resource location, the pilot signal and a sequence number combined from the specified state information and the pilot location that correspond to each pilot signal to the receiver according to the respective specified state, where the transmitter prestores the sequence number combined from the specified state information and the pilot location that correspond to each pilot signal.

For example, the transmitter may send, on a specified resource location corresponding to a pilot channel, the pilot signal to the receiver according to the respective specified state, where the pilot channel is a channel for transmitting a reconfigurable MIMO setting.

The transmitter may also send, on a resource location corresponding to a common pilot channel of a common channel, the pilot signal to the receiver according to the respective specified state.

The transmitter may also send, on a resource location corresponding to a dedicated pilot channel of a dedicated channel, the pilot signal to the receiver according to the respective specified state, where the respective specified initial state is a randomly selected state or a history state of the first antenna.

S102: The transmitter receives the optimal antenna state set fed back by the receiver.
S103: The transmitter correspondingly adjusts a state of each first antenna according to the state of each first antenna that is indicated by the optimal antenna state set,
so that each first antenna sends a data packet to the receiver according to the state in the optimal antenna state set.

The MIMO transmission method in this embodiment is applicable to the transmitter in the method embodiment shown in FIG. 1, and their implementation principles and technical solutions are similar, which are not described in detail herein again.

According to the MIMO transmission method provided in this embodiment of the present invention, at least two first antennas performing transmission by using MIMO each is configured to send, on a specified resource location, a pilot signal and specified state information and a pilot location that correspond to the pilot signal to a receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and a processor is configured to correspondingly adjust a state of each first antenna according to a state of each first antenna that is indicated by the antenna state set, so that each first antenna sends a data packet to the receiver according to the state in the optimal antenna state set. In this way, a transmitter may send, on a specified resource location, pilot signals according to specified states, so that a receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

FIG. 5 is a schematic flowchart of another embodiment of a MIMO transmission method according to the present invention. The method is applicable to a receiver that includes at least two second antennas performing transmission by using MIMO. As shown in FIG. 5, the transmission method includes:

S201: A receiver receives, on a specified resource location, a pilot signal, and specified state information and a pilot location that are of a first antenna and that correspond to the pilot signal, where the pilot signal, the specified state information, and the pilot location are sent by each first antenna in a specified state.

Further, the receiver may receive the pilot signal and a sequence number combined from the specified state information and the pilot location that correspond to each pilot signal, where the pilot signal and the sequence number are sent on the specified resource location by each first antenna in the specified state, and receiver prestores the sequence number combined from the specified state information and the pilot location that correspond to each pilot signal.

For example, the receiver may receive, on a specified resource location corresponding to a pilot channel, the pilot signal sent by a transmitter, where the pilot channel is a channel for transmitting a reconfigurable MIMO setting; or may receive, on a resource location corresponding to a common pilot channel of a common channel, the pilot signal sent by a transmitter; or may also receive, on a resource location corresponding to a dedicated pilot channel of a dedicated channel, the pilot signal sent by a transmitter.

S202: The receiver calculates a channel capacity or a signal-to-noise ratio according to the received specified state information and pilot location that are of the first antenna and that correspond to each pilot signal, to obtain an antenna state set corresponding to a maximum channel capacity or an optimal antenna state set corresponding to a maximum signal-to-noise ratio, where the antenna state set is used to indicate a state of each first antenna.

Further, before calculating the maximum channel capacity or the maximum signal-to-noise ratio, the receiver may first determine whether a quantity of different groups is greater than or equal to L, for example, store specified state information and a pilot location that are received each time, that are of the first antenna, and that correspond to each pilot signal as a group, until a quantity Q of the different groups is greater than or equal to L, where $L=M^N$, M is a quantity of the first antennas, and N is a quantity of the specified state information and the pilot locations that correspond to each first antenna.

For example, the receiver is applicable to a structure and a method of use of the receiver in FIG. 2, and obtains the maximum channel capacity according to a calculation method shown in FIG. 3b. For example, the receiver may calculate a channel capacity by using specified state information and a pilot location that are of each first antenna in a same specified state, and determine an obtained channel capacity having the maximum value as a first channel capacity, where an antenna state corresponding to the first channel capacity is a first specified state; by using the first specified state as a state of a first first antenna, traverse information about all other first antennas in states, calculate channel capacities, and determine an obtained channel capacity having the maximum value as a second channel capacity; by using the first specified state as a state of a second first antenna, traverse information about all other first antennas in states, calculate channel capacities, and determine an obtained channel capacity having the maximum value as a third channel capacity; and perform a similar process until an $M^{th}$ channel capacity is obtained, select states that correspond to the first antennas when a channel capacity is maximum in M channel capacities to form the optimal antenna state set, where M is a quantity of the first antennas, and M is an integer greater than 1.

Alternatively, the receiver may calculate a signal-to-noise ratio by using specified state information and a pilot location that are of each first antenna in a same specified state, and determine an obtained signal-to-noise ratio having the maximum value as a first signal-to-noise ratio, where an antenna state corresponding to the first signal-to-noise ratio is a first specified state; by using the first specified state as a state of a first first antenna, traverse information about all other first antennas in states, calculate signal-to-noise ratios, and determine an obtained signal-to-noise ratio having the maximum value as a second signal-to-noise ratio; by using the first specified state as a state of a second first antenna, traverse information about all other first antennas in states, calculate signal-to-noise ratios, and determine an obtained signal-to-noise ratio having the maximum value as a third signal-to-noise ratio; and perform a similar process until an $M^{th}$ signal-to-noise ratio is obtained, select states that correspond to the first antennas when a signal-to-noise ratio is maximum in M signal-to-noise ratios to form the optimal antenna state set, where M is a quantity of the first antennas, and M is an integer greater than 1.

S203: The receiver feeds back the obtained optimal antenna state set to a transmitter, so that the transmitter correspondingly adjusts a state of each first antenna according to the state of each first antenna that is indicated by the optimal antenna state set.

According to the MIMO transmission method provided in this embodiment of the present invention, at least two first antennas performing transmission by using MIMO each is configured to send, on a specified resource location, a pilot signal and specified state information and a pilot location that correspond to the pilot signal to a receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and a processor is configured to correspondingly adjust a state of each first antenna according to a state of each first antenna that is indicated by the antenna state set, so that each first antenna sends a data packet to the receiver according to the state in the optimal antenna state set. In this way, a transmitter may send, on a specified resource location, pilot signals according to specified states, so that a receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

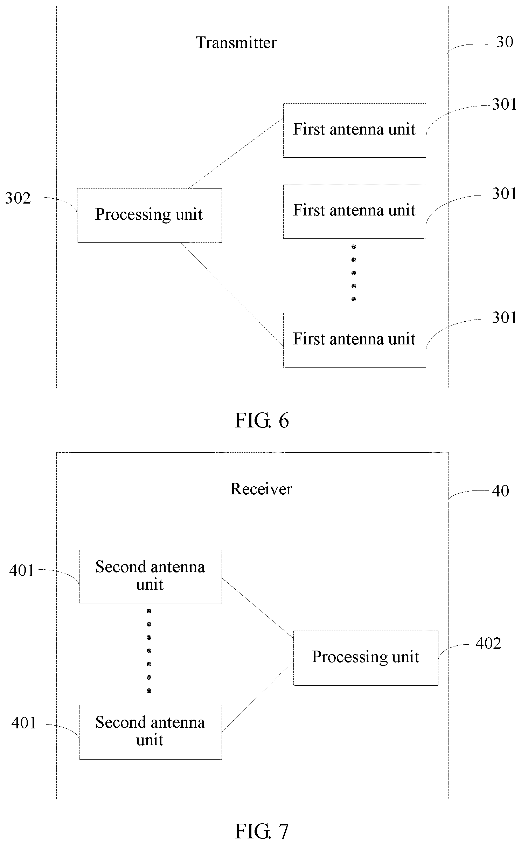

FIG. 6 is a schematic structural diagram of another embodiment of a transmitter according to the present invention. As shown in FIG. 6, the transmitter 30 includes: at least two first antenna units 301 performing transmission by using MIMO, and a processing unit 302.

The at least two first antenna units 301 performing transmission by using MIMO each is configured to send, on a specified resource location, a pilot signal and specified state information and a pilot location that correspond to the pilot signal to a receiver according to a respective specified state, so that the receiver determines, according to the specified state information and the pilot location, an antenna state set corresponding to a maximum channel capacity or an antenna state set corresponding to a maximum signal-to-noise ratio, where the antenna state set is used to indicate a state of each first antenna.

Further, the first antenna units 301 each may also be configured to send, on the specified resource location, the pilot signal and a sequence number combined from the specified state information and the pilot location that correspond to each pilot signal to the receiver according to the respective specified state, where the transmitter prestores the sequence number combined from the specified state information and the pilot location that correspond to each pilot signal. For example, the first antenna units 301 each may send, on a specified resource location corresponding to a pilot channel, the pilot signal to the receiver according to the respective specified state, where the pilot channel is a channel for transmitting a reconfigurable MIMO setting; or the first antenna units 301 each may send, on a resource location corresponding to a common pilot channel of a common channel, the pilot signal to the receiver according to the respective specified state; or the first antenna units 301 each may send, on a resource location corresponding to a dedicated pilot channel of a dedicated channel, the pilot signal to the receiver according to the respective specified state, where the respective specified initial state is a randomly selected state or a history state of the first antenna.

The first antenna unit 301 is further configured to receive the optimal antenna state set fed back by the receiver.

The processing unit 302 is configured to correspondingly adjust a state of each first antenna according to the state of each first antenna that is indicated by the optimal antenna state set, so that each first antenna sends a data packet to the receiver according to the state in the optimal antenna state set.

According to the device provided in this embodiment of the present invention, a transmitter of MIMO transmission includes: at least two first antennas performing transmission by using MIMO, each configured to send, on a specified resource location, a pilot signal and specified state information and a pilot location that correspond to the pilot signal to the receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and the processor, configured to correspondingly adjust a state of each first antenna according to a state of each first antenna that is indicated by the antenna state set, so that each first antenna sends a data packet to the receiver according to the state in the optimal antenna state set. In this way, a transmitter may send, on a specified resource location, pilot signals according to specified states, so that a receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

FIG. 7 is a schematic structural diagram of another embodiment of a receiver according to the present invention. As shown in FIG. 7, the receiver 40 includes: at least two second antenna units 401 performing transmission by using MIMO, and a processing unit 402.

The at least two second antenna units 401 performing transmission by using MIMO each is configured to receive a pilot signal, and specified state information and a pilot location that are of a first antenna unit and that correspond to the pilot signal, where the pilot signal, the specified state information, and the pilot location are sent on a specified resource location by each first antenna unit in a specified state.

Further, the second antenna units 401 each is configured to receive, on the specified resource location, the pilot signal and a sequence number combined from the specified state information and the pilot location that correspond to each pilot signal, where the pilot signal and the sequence number are sent by each first antenna in the specified state, and the receiver prestores the sequence number combined from the specified state information and the pilot location that correspond to each pilot signal.

For example, the second antenna unit 401 may receive, on a specified resource location corresponding to a pilot channel, the pilot signal sent by a transmitter, where the pilot channel is a channel for transmitting a reconfigurable MIMO setting; or receive, on a resource location corresponding to a common pilot channel of a common channel, the pilot signal sent by a transmitter; or receive, on a resource location corresponding to a dedicated pilot channel of a dedicated channel, the pilot signal sent by a transmitter.

The processing unit 402 is configured to calculate a channel capacity or a signal-to-noise ratio according to the received specified state information and pilot location that are of the first antenna unit and that correspond to each pilot signal, to obtain an antenna state set corresponding to a maximum channel capacity or an optimal antenna state set corresponding to a maximum signal-to-noise ratio, where the antenna state set is used to indicate a state of each first antenna.

Further, the processing unit 402 is further configured to: before calculating the channel capacity or the signal-to-noise ratio, store specified state information and pilot locations that are received each time, that are of the first antenna units, and that correspond to the pilot signals as a group, until a quantity Q of the different groups is greater than or equal to L, where $L=M^N$, M is a quantity of the first antenna units, and N is a quantity of the specified state information and the pilot locations that correspond to each first antenna unit.

For example, the processing unit 402 calculates a channel capacity by using specified state information and a pilot location that are of each first antenna in a same specified state, and determines an obtained channel capacity having the maximum value as a first channel capacity, where an antenna state corresponding to the first channel capacity is a first specified state; by using the first specified state as a state of a first first antenna, traverses information about all other first antennas in states, calculates channel capacities, and determines an obtained channel capacity having the maximum value as a second channel capacity; by using the first specified state as a state of a second first antenna, traverses information about all other first antennas in states, calculates channel capacities, and determines an obtained channel capacity having the maximum value as a third channel capacity; and perform a similar process until an $M^{th}$ channel capacity is obtained, selects states that correspond to the first antennas when a channel capacity is maximum in M channel capacities to form the optimal antenna state set, where M is a quantity of the first antennas, and M is an integer greater than 1.

Alternatively, the processing unit 402 may be further specifically configured to calculate a signal-to-noise ratio by using specified state information and a pilot location that are of each first antenna in a same specified state, and determine an obtained signal-to-noise ratio having the maximum value as a first signal-to-noise ratio, where an antenna state corresponding to the first signal-to-noise ratio is a first specified state; by using the first specified state as a state of a first first antenna, traverse information about all other first antennas in states, calculate signal-to-noise ratios, and determine an obtained signal-to-noise ratio having the maximum value as a second signal-to-noise ratio; by using the first specified state as a state of a second first antenna, traverse information about all other first antennas in states, calculate signal-to-noise ratios, and determine an obtained signal-to-noise ratio having the maximum value as a third signal-to-noise ratio; and perform a similar process until an $M^{th}$ signal-to-noise ratio is obtained, select states that correspond to the first antennas when a signal-to-noise ratio is maximum in M signal-to-noise ratios to form the optimal antenna state set, where M is a quantity of the first antennas, and M is an integer greater than 1.

The second antenna units 401 each is further configured to feed back the obtained optimal antenna state set to the transmitter, so that the transmitter correspondingly adjusts a state of each first antenna according to the state of each first antenna that is indicated by the optimal antenna state set.

According to the device provided in this embodiment of the present invention, a transmitter of MIMO transmission includes: at least two first antennas performing transmission by using MIMO, each configured to send, on a specified resource location, a pilot signal and specified state information and a pilot location that correspond to the pilot signal to the receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and the processor, configured to correspondingly adjust a state of each first antenna according to a state of each first antenna that is indicated by the antenna state set, so that each first antenna sends a data packet to the receiver according to the state in the optimal antenna state set. In this way, a transmitter may send, on a specified resource location, pilot signals according to specified states, so that a receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

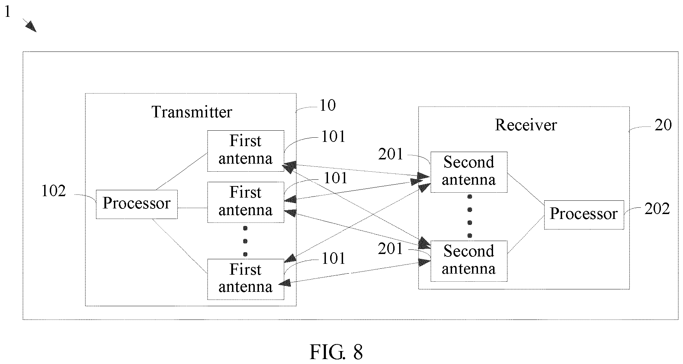

FIG. 8 is a schematic structural diagram of an embodiment of a MIMO transmission system according to the present invention. As shown in FIG. 8, the MIMO transmission system 1 includes:
a transmitter 10 and a receiver 20.

In the MIMO transmission system 1, the transmitter 10 may use a structure of the transmitter 10 shown in FIG. 1, and the receiver 20 may use a structure of the receiver 20 shown in FIG. 2. The system in this embodiment may be configured to execute technical solutions of method embodiments shown in FIG. 4 and FIG. 5, and their implementation principles and technical effects are similar, which are not described in detail herein again.

Alternatively, the MIMO transmission system includes: a transmitter 10 and a receiver 20. In the MIMO transmission system, the transmitter 10 may use a structure of the transmitter 30 shown in FIG. 6, and the receiver 20 may use a structure of the receiver 40 shown in FIG. 7. The system in this embodiment may be configured to execute technical solutions of method embodiments shown in FIG. 4 and FIG. 5, and their implementation principles and technical effects are similar, which are not described in detail herein again.

According to the transmitter of MIMO transmission provided in this embodiment of the present invention, a transmitter of MIMO transmission includes: at least two first antennas performing transmission by using MIMO, each configured to send, on a specified resource location, a pilot signal and specified state information and a pilot location that correspond to the pilot signal to the receiver according to a respective specified state, so that the receiver determines, according to the specified state information and the pilot location, an antenna state set corresponding to a maximum channel capacity or an optimal antenna state set corresponding to a maximum signal-to-noise ratio, and further configured to receive the optimal antenna state set fed back by the receiver; and a processor, configured to correspondingly adjust a state of each first antenna according to a state of each first antenna that is indicated by the antenna state set, so that each first antenna sends a data packet to the receiver according to the state in the optimal antenna state set. In this way, the transmitter may send, on a specified resource location, pilot signals according to specified states, so that the receiver calculates, according to these specified states, an antenna state set corresponding to a maximum channel capacity or signal-to-noise ratio, and adjusts a state of each first antenna according to this antenna state set to obtain a combination manner of optimal antenna states without traversing each state of all the first antennas, which therefore can quickly determine an antenna state set of at least two first antennas performing transmission by using MIMO, and reduce adjustment times to try different states of the first antennas, thereby obtaining a combination of optimal transmit states of the at least two first antennas with a minimum quantity of state attempts, and improving transmit efficiency of the pilot signals.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

**Claims**

1. A multiple-input multiple-output MIMO transmission method, applicable to a transmitter that comprises at least two reconfigurable first antennas performing transmission by using MIMO, and comprising:

   each sending, on a specified resource location, a pilot signal, specified antenna state information and a pilot location to a receiver according to a respective specified antenna state, so that the receiver determines, according to the specified antenna state information and the pilot location, an optimal antenna state set corresponding to a maximum channel capacity or an optimal antenna state set corresponding to a maximum signal-to-noise ratio, wherein the optimal antenna state set is used to indicate an antenna state of each first antenna;
   receiving the optimal antenna state set fed back by the receiver; and
   correspondingly adjusting an antenna state of each first antenna according to the antenna state of each first antenna that is indicated by the optimal antenna state set, so that each first antenna sends a data packet to the receiver according to the antenna state in the optimal antenna state set,
   where the specified antenna state information and the pilot location correspond to the pilot signal,
   **characterized in that**:

   determining, at the receiver, the optimal antenna state set corresponding to a maximum channel capacity or to the maximum signal-to-noise ratio respectively comprises calculating a channel capacity or signal-to-noise ratio by using specified antenna state information and a pilot location that are of each first antenna in a same specified antenna state, and determining an obtained channel capacity or signal-to-noise ratio having the maximum value as a first channel capacity or signal-to-noise ratio, wherein an antenna state corresponding to the first channel capacity or signal-to-noise ratio is a first specified antenna state;

by using the first specified antenna state as an antenna state of a first first antenna, traversing information about all other first antennas in antenna states, calculating channel capacities or signal-to-noise ratios, and determining an obtained channel capacity or signal-to-noise ratio having the maximum value as a second channel capacity or signal-to-noise ratio;

by using the first specified antenna state as an antenna state of a second first antenna, traversing information about all other first antennas in antenna states, calculating channel capacities or signal-to-noise ratios, and determining an obtained channel capacity or signal-to-noise ratio having the maximum value as a third channel capacity or signal-to-noise ratio; and

performing a corresponding process until an $M^{th}$ channel capacity or signal-to-noise ratio is obtained, selecting antenna states that correspond to the first antennas when a channel capacity or signal-to-noise ratio is maximum in M channel capacities or signal-to-noise ratios to form the optimal antenna state set, wherein M is a quantity of the first antennas, and M is an integer greater than 1;

wherein the pilot location is a pilot location at the transmitter.

2. The method according to claim 1, wherein the each sending, on a specified resource location, a pilot signal and specified antenna state information and a pilot location that correspond to the pilot signal to a receiver according to a respective specified antenna state comprises:

each sending, on the specified resource location, the pilot signal and a sequence number combined from the specified antenna state information and the pilot location that correspond to each pilot signal to the receiver according to the respective specified antenna state, wherein the transmitter prestores the sequence number combined from the specified antenna state information and the pilot location that correspond to each pilot signal.

3. The method according to claim 1 or 2, wherein the each sending, on a specified resource location, a pilot signal to a receiver according to a respective specified antenna state comprises:

each sending, on a specified resource location corresponding to a pilot channel, the pilot signal to the receiver according to the respective specified antenna state, wherein the pilot channel is a channel for transmitting a reconfigurable MIMO setting; or

each sending, on a resource location corresponding to a common pilot channel of a common channel, the pilot signal to the receiver according to the respective specified antenna state; or

each sending, on a resource location corresponding to a dedicated pilot channel of a dedicated channel, the pilot signal to the receiver according to the respective specified antenna state, wherein the respective specified initial antenna state is a randomly selected antenna state or a history antenna state of the first antenna.

4. A multiple-input multiple-output MIMO transmission method, applicable to a receiver that comprises at least two second antennas performing transmission by using MIMO, and comprising:

receiving a pilot signal, specified antenna state information and a pilot location that are of a reconfigurable first antenna, wherein the pilot signal, the specified antenna state information, and the pilot location are sent on a specified resource location by each first antenna in a specified antenna state;

calculating a channel capacity or a signal-to-noise ratio according to the received specified antenna state information and pilot location that are of the first antenna and that correspond to each pilot signal, to obtain an optimal antenna state set corresponding to a maximum channel capacity or an optimal antenna state set corresponding to a maximum signal-to-noise ratio, wherein the antenna state set is used to indicate a state of each first antenna; and

feeding back the obtained optimal antenna state set to a transmitter, so that the transmitter correspondingly adjusts an antenna state of each first antenna according to the antenna state of each first antenna that is indicated by the optimal antenna state set,

where the specified antenna state information and the pilot location correspond to the pilot signal,

**characterized in that**

the calculating a channel capacity or a signal-to-noise ratio according to the received specified antenna state information and pilot location that are of the first antenna and that correspond to each pilot signal, to obtain an optimal antenna state set corresponding to a maximum channel capacity or a maximum signal-to-noise ratio comprises:

calculating a channel capacity or signal-to-noise ratio by using specified antenna state information and a pilot location that are of each first antenna in a same specified antenna state, and determining an obtained channel capacity or signal-to-noise ratio having the maximum value as a first channel capacity or signal-to-noise ratio, wherein an antenna state corresponding to the first channel capacity or signal-to-noise ratio is a first specified antenna state;

by using the first specified antenna state as an antenna state of a first first antenna, traversing information about all other first antennas in states, calculating channel capacities or signal-to-noise ratios, and determining an obtained channel capacity or signal-to-noise ratio having the maximum value as a second channel capacity or signal-to-noise ratio;

by using the first specified antenna state as an antenna state of a second first antenna, traversing information about all other first antennas in states, calculating channel capacities or signal-to-noise ratios, and determining an obtained channel capacity or signal-to-noise ratio having the maximum value as a third channel capacity or signal-to-noise ratio; and

performing a corresponding process until an $M^{th}$ channel capacity or signal-to-noise ratio is obtained, selecting antenna states that correspond to the first antennas when a channel capacity or signal-to-noise ratio is maximum in M channel capacities or signal-to-noise ratios to form the optimal antenna state set, wherein M is a quantity of the first antennas, and M is an integer greater than 1;

wherein the pilot location is a pilot location at the transmitter.

5. The method according to claim 4, wherein the receiving a pilot signal and specified antenna state information and a pilot location that are of a first antenna and that correspond to the pilot signal, wherein the pilot signal, the specified antenna state information, and the pilot location are sent on a specified resource location by each first antenna in a specified antenna state comprises:

receiving the pilot signal and a sequence number combined from the specified antenna state information and the pilot location that correspond to each pilot signal, wherein the pilot signal and the sequence number are sent on the specified resource location by each first antenna in the specified antenna state, and the receiver prestores the sequence number combined from the specified antenna state information and the pilot location that correspond to each pilot signal.

6. The method according to claim 4 or 5, before the calculating a channel capacity or a signal-to-noise ratio according to the received specified antenna state information and pilot location that are of the first antenna and that correspond to each pilot signal, further comprising:

storing specified antenna state information and a pilot location that are received each time, that are of the first antenna, and that correspond to each pilot signal as a group, until a quantity Q of the different groups is greater than or equal to L, wherein L=$M^N$, M is a quantity of the first antennas, and N is a quantity of the specified antenna state information and the pilot locations that correspond to each first antenna.

7. The method according to any one of claims 4 to 6, wherein the receiving a pilot signal that is sent on a specified resource location by each first antenna in a specified antenna state comprises:

each receiving, on a specified resource location corresponding to a pilot channel, the pilot signal sent by the transmitter, wherein the pilot channel is a channel for transmitting a reconfigurable MIMO setting; or

each receiving, on a resource location corresponding to a common pilot channel of a common channel, the pilot signal sent by the transmitter; or

each receiving, on a resource location corresponding to a dedicated pilot channel of a dedicated channel, the pilot signal sent by the transmitter.

8. A multiple-input multiple-output MIMO system having a receiver and a transmitter, the transmitter, comprising:

at least two reconfigurable first antenna units performing transmission by using multiple-input multiple-output MIMO, each configured to send, on a specified resource location, a pilot signal, specified antenna state information and a pilot location that correspond to the pilot signal to the receiver according to a respective specified antenna state, so that the receiver determines, according to the specified antenna state information and the pilot location, an optimal antenna state set corresponding to a maximum channel capacity or an optimal antenna state set corresponding to a maximum signal-to-noise ratio, wherein the optimal antenna state set is used to indicate an antenna state of each first antenna, and

the first antenna units each is further configured to receive the optimal antenna state set fed back by the receiver; and

a processing unit, configured to correspondingly adjust an antenna state of each first antenna according to the antenna state of each first antenna that is indicated by the optimal antenna state set, so that each first antenna sends a data packet to the receiver according to the antenna state in the optimal antenna state set,

where the specified antenna state information and the pilot location that correspond to the pilot signal,

**characterized in that** the receiver is specifically configured to calculate a channel capacity or signal-to-noise ratio, respectively, based on whether the optimal antenna state set corresponding to the maximum channel capacity or corresponding to the maximum signal to noise ratio is determined, by using specified antenna state information and a pilot location that are of each first antenna in a same specified antenna state, and determine an obtained channel capacity or signal-to-noise ratio having the maximum value as a first channel capacity or signal-to-noise ratio, wherein an antenna state corresponding to the first channel capacity or signal-to-noise ratio is a first specified antenna state;

by using the first specified antenna state as an antenna state of a first first antenna, traverse information about all other first antennas in states, calculate channel capacities or signal-to-noise ratios, and determine an obtained channel capacity or signal-to-noise ratio having the maximum value as a second channel capacity or signal-to-noise ratio;

by using the first specified antenna state as an antenna state of a second first antenna, traverse information about all other first antennas in antenna states, calculate channel capacities or signal-to-noise ratios, and determine an obtained channel capacity or signal-to-noise ratio having the maximum value as a third channel capacity or signal-to-noise ratio; and

perform a corresponding process until an $M^{th}$ channel capacity or signal-to-noise ratio is obtained, select antenna states that correspond to the first antennas when a channel capacity or signal-to-noise ratio is maximum in M channel capacities or signal-to-noise ratios to form the optimal antenna state set, wherein M is a quantity of the first antennas, and M is an integer greater than 1;

wherein the pilot location is a pilot location at the transmitter.

9. The MIMO system according to claim 8, wherein the first antenna units each is configured to send, on the specified resource location, the pilot signal and a sequence number combined from the specified antenna state information and the pilot location that correspond to each pilot signal to the receiver according to the respective specified antenna state, wherein the transmitter prestores the sequence number combined from the specified antenna state information and the pilot location that correspond to each pilot signal.

10. The MIMO system according to claim 8 or 9, wherein the first antenna units each is specifically configured to send, on a specified resource location corresponding to a pilot channel, the pilot signal to the receiver according to the respective specified antenna state, wherein the pilot channel is a channel for transmitting a reconfigurable MIMO setting; or

the first antenna units each is specifically configured to send, on a resource location corresponding to a common pilot channel of a common channel, the pilot signal to the receiver according to the respective specified antenna state; or

the first antenna units each is specifically configured to send, on a resource location corresponding to a dedicated pilot channel of a dedicated channel, the pilot signal to the receiver according to the respective specified antenna state, wherein the respective specified initial antenna state is a randomly selected antenna state or a history antenna state of the first antenna.

11. A receiver, comprising:

at least two second antenna units performing transmission by using multiple-input multiple-output MIMO, each configured to receive a pilot signal, specified antenna state information and a pilot location that are of a reconfigurable first antenna unit, wherein the pilot signal, the specified antenna state information, and the pilot location are sent on a specified resource location by each first antenna unit in a specified antenna state; and

a processing unit, configured to calculate a channel capacity or a signal-to-noise ratio according to the received specified antenna state information and pilot location that are of the first antenna and that correspond to each pilot signal, to obtain an optimal antenna state set corresponding to a maximum channel capacity or an optimal antenna state set corresponding to a maximum signal-to-noise ratio, wherein the antenna state set is used to indicate an antenna state of each first antenna, and
the second antenna units each is further configured to feed back the obtained optimal antenna state set to a transmitter, so that the transmitter correspondingly adjusts an antenna state of each first antenna according to the antenna state of each first antenna that is indicated by the optimal antenna state set,
where the specified antenna state information and the pilot location correspond to the pilot signal,

**characterized in that**

the processing unit is specifically configured to calculate a channel capacity or signal-to-noise ratio, respectively, based on whether the optimal antenna state set corresponding to the maximum channel capacity or corresponding to the maximum signal to noise ratio is obtained,
by using specified antenna state information and a pilot location that are of each first antenna in a same specified antenna state, and determine an obtained channel capacity or signal-to-noise ratio having the maximum value as a first channel capacity or signal-to-noise ratio, wherein an antenna state corresponding to the first channel capacity or signal-to-noise ratio is a first specified antenna state;
by using the first specified antenna state as an antenna state of a first first antenna, traverse information about all other first antennas in antenna states, calculate channel capacities or signal-to-noise ratios, and determine an obtained channel capacity or signal-to-noise ratio having the maximum value as a second channel capacity or signal-to-noise ratio;
by using the first specified antenna state as an antenna state of a second first antenna, traverse information about all other first antennas in states, calculate channel capacities or signal-to-noise ratios, and determine an obtained channel capacity or signal-to-noise ratio having the maximum value as a third channel capacity or signal-to-noise ratio; and
perform a corresponding process until an $M^{th}$ channel capacity or signal-to-noise ratio is obtained, select antenna states that correspond to the first antennas when a channel capacity or signal-to-noise ratio is maximum in M channel capacities or signal-to-noise ratios to form the optimal antenna state set, wherein M is a quantity of the first antennas, and M is an integer greater than 1;
wherein the pilot location is a pilot location at the transmitter.

12. The receiver according to claim 11, wherein the second antenna units each is configured to receive the pilot signal and a sequence number combined from the specified antenna state information and the pilot location that correspond to each pilot signal, wherein the pilot signal and the sequence number are sent on the specified resource location by each first antenna in the specified antenna state, and the receiver prestores the sequence number combined from the specified antenna state information and the pilot location that correspond to each pilot signal.

13. The receiver according to claim 11 or 12, wherein the second antenna units each is specifically configured to receive, on a specified resource location corresponding to a pilot channel, the pilot signal sent by the transmitter, wherein the pilot channel is a channel for transmitting a reconfigurable MIMO setting; or
the second antenna units each is specifically configured to receive, on a resource location corresponding to a common pilot channel of a common channel, the pilot signal sent by the transmitter; or
the second antenna units each is specifically configured to receive, on a resource location corresponding to a dedicated pilot channel of a dedicated channel, the pilot signal sent by the transmitter.

**Patentansprüche**

1. Übertragungsverfahren mit Mehrfachempfangs- und -sendeantennen (Multiple-Input Multiple-Output transmission method, MIMO-Übertragungsverfahren), das in einem Sender anwendbar ist, der mindestens zwei neukonfigurierbare erste Antennen umfasst, die eine Übertragung mithilfe eines MIMO ausführen, und wobei das Verfahren umfasst:

jeweiliges Senden eines Pilotsignals, festgelegter Antennenzustandsinformationen und eines Pilotorts von einem festgelegten Ressourcenort an einen Empfänger gemäß einem entsprechenden Antennenzustand, sodass der Empfänger gemäß den festgelegten Antennenzustandsinformationen und gemäß dem Pilotort eine Gruppe von optimalen Antennenzuständen, die einer maximalen Kanalkapazität entsprechen, oder eine Gruppe von optimalen Antennenzuständen ermittelt, die einem maximalen Signal-Rausch-Verhältnis entsprechen, wobei die Gruppe von optimalen Antennenzuständen verwendet wird, um einen Antennenzustand von jeder ersten Antenne anzuzeigen;
Empfangen der Gruppe von optimalen Antennenzuständen, die von dem Empfänger zurückgemeldet wird; und

entsprechendes Anpassen eines Antennenzustands von jeder ersten Antenne gemäß dem Antennenzustand von jeder ersten Antenne, der durch die Gruppe von optimalen Antennenzuständen angezeigt wird, sodass jede erste Antenne ein Datenpaket an den Empfänger gemäß dem Antennenzustand in der Gruppe von optimalen Antennenzuständen sendet,

wobei die festgelegten Antennenzustandsinformationen und der Pilotort dem Pilotsignal entsprechen,

**dadurch gekennzeichnet, dass**:

ein Ermitteln in dem Empfänger der Gruppe von optimalen Antennenzuständen, die einer maximalen Kanalkapazität bzw. dem maximalen Signal-Rausch-Verhältnis entsprechen, umfasst:

Berechnen einer Kanalkapazität oder eines Signal-Rausch-Verhältnisses, indem festgelegte Antennenzustandsinformationen und ein Pilotort verwendet werden, die von jeder ersten Antenne in einem gleichen festgelegten Antennenzustand stammen, und Ermitteln einer erhaltenen Kanalkapazität oder eines erhaltenen Signal-Rausch-Verhältnisses, die einen maximalen Wert aufweisen, als eine erste Kanalkapazität oder ein erstes Signal-Rausch-Verhältnis, wobei ein Antennenzustand, welcher der ersten Kanalkapazität oder dem ersten Signal-Rausch-Verhältnis entsprechen, ein erster festgelegter Antennenzustand ist;

durch ein Verwenden des ersten festgelegten Antennenzustands als einen Antennenzustand einer ersten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine zweite Kanalkapazität oder ein zweites Signal-Rausch-Verhältnis;

durch ein Verwenden des ersten festgelegten Antennenzustands als einen Antennenzustand einer zweiten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine dritte Kanalkapazität oder ein drittes Signal-Rausch-Verhältnis; und

Ausführen eines entsprechenden Prozesses, bis eine M-te Kanalkapazität oder ein M-tes Signal-Rausch-Verhältnis erhalten wird, Auswählen von Antennenzuständen, die den ersten Antennen entsprechen, wenn eine Kanalkapazität oder ein Signal-Rausch-Verhältnis aus den Kanalkapazitäten oder aus den Signal-Rausch-Verhältnissen maximal ist, um die Gruppe von optimalen Antennenzuständen zu bilden, wobei M eine Anzahl der ersten Antennen ist und M eine ganze Zahl größer als 1 ist; wobei der Pilotort ein Pilotort in dem Sender ist.

2. Verfahren nach Anspruch 1, wobei das jeweilige Senden eines Pilotsignals und der festgelegten Antennenzustandsinformationen und eines Pilotorts, die dem Pilotsignal entsprechen, von einem festgelegten Ressourcenort an einen Empfänger gemäß einem entsprechenden festgelegten Antennenzustand umfasst:

jeweiliges Senden des Pilotsignals und einer Sequenzanzahl, die aus den festgelegten Antennenzustandsinformationen und dem Pilotort kombiniert wird, die jedem Pilotsignal entsprechen, von dem festgelegten Ressourcenort an den Empfänger gemäß einem entsprechenden festgelegten Antennenzustand, wobei der Sender die Sequenzanzahl, die aus den festgelegten Antennenzustandsinformationen und dem Pilotort kombiniert wird, die jedem Pilotsignal entsprechen, vorab speichert.

3. Verfahren nach Anspruch 1 oder 2, wobei das jeweilige Senden eines Pilotsignals von einem festgelegten Ressourcenort an einen Empfänger gemäß einem entsprechenden festgelegten Antennenzustand umfasst:

jeweiliges Senden des Pilotsignals von einem festgelegten Ressourcenort, der einem Pilotkanal entspricht, an den Empfänger gemäß dem entsprechenden festgelegten Antennenzustand, wobei der Pilotkanal ein Kanal zum Senden einer neukonfigurierbaren MIMO-Einstellung ist; oder

jeweiliges Senden des Pilotsignals von einem Ressourcenort, der einem gemeinsamen Pilotkanal eines gemeinsamen Kanals entspricht, an den Empfänger gemäß dem entsprechenden festgelegten Antennenzustand; oder

jeweiliges Senden des Pilotsignals von einem Ressourcenort, der einem zweckbestimmten Pilotkanal eines zweckbestimmten Kanals entspricht, an den Empfänger gemäß dem entsprechenden festgelegten Antennenzustand, wobei der entsprechende festgelegte anfängliche Antennenzustand ein zufällig ausgewählter Antennenzustand oder ein Langzeitantennenzustand der ersten Antenne ist.

4. Übertragungsverfahren mit Mehrfachempfangs- und -sendeantennen (Multiple-Input Multiple-Output transmission method, MIMO-Übertragungsverfahren), das in einem Empfänger anwendbar ist, der mindestens zwei zweite Antennen umfasst, die eine Übertragung mithilfe eines MIMO ausführen, und wobei das Verfahren umfasst:

Empfangen eines Pilotsignals, festgelegter Antennenzustandsinformationen und eines Pilotorts, die von einer neukonfigurierbaren ersten Antenne stammen, wobei das Pilotsignal, die festgelegten Antennenzustandsinformationen und der Pilotort von einem festgelegten Ressourcenort von jeder ersten Antenne in einem festgelegten Antennenzustand gesendet werden;

Berechnen einer Kanalkapazität oder eines Signal-Rausch-Verhältnisses gemäß den empfangenen festgelegten Antennenzustandsinformationen und gemäß dem Pilotort, die von der ersten Antenne stammen und die jedem Pilotsignal entsprechen, um eine Gruppe von optimalen Antennenzuständen, die einer maximalen Kanalkapazität entsprechen, oder eine Gruppe von optimalen Antennenzuständen zu erhalten, die einem maximalen Signal-Rausch-Verhältnis entsprechen, wobei die Gruppe von Antennenzuständen verwendet wird, um einen Antennenzustand von jeder ersten Antenne anzuzeigen; und

Rückmelden der erhaltenen Gruppe von optimalen Antennenzuständen an einen Sender, sodass der Sender jeweils einen Antennenzustand von jeder ersten Antenne gemäß dem Antennenzustand von jeder ersten Antenne anpasst, der durch die Gruppe von optimalen Antennenzuständen angezeigt wird, wobei die festgelegten Antennenzustandsinformationen und der Pilotort dem Pilotsignal entsprechen,

**dadurch gekennzeichnet, dass**

das Berechnen einer Kanalkapazität oder eines Signal-Rausch-Verhältnisses gemäß den empfangenen festgelegten Antennenzustandsinformationen und gemäß dem Pilotort, die von der ersten Antenne stammen und die jedem Pilotsignal entsprechen, um eine Gruppe von optimalen Antennenzuständen zu erhalten, die einer maximalen Kanalkapazität oder einem maximalen Signal-Rausch-Verhältnis entsprechen, umfasst:

Berechnen einer Kanalkapazität oder eines Signal-Rausch-Verhältnisses, indem festgelegte Antennenzustandsinformationen und ein Pilotort verwendet werden, die von jeder ersten Antenne in einem gleichen festgelegten Antennenzustand stammen, und Ermitteln einer erhaltenen Kanalkapazität oder eines erhaltenen Signal-Rausch-Verhältnisses, die einen maximalen Wert aufweisen, als eine erste Kanalkapazität oder ein erstes Signal-Rausch-Verhältnis, wobei ein Antennenzustand, welcher der ersten Kanalkapazität oder dem ersten Signal-Rausch-Verhältnis entspricht, ein erster festgelegter Antennenzustand ist;

durch ein Verwenden des ersten festgelegten Antennenzustands als einen Antennenzustand einer ersten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine zweite Kanalkapazität oder ein zweites Signal-Rausch-Verhältnis;

durch ein Verwenden des ersten festgelegten Antennenzustands als einen Antennenzustand einer zweiten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine dritte Kanalkapazität oder ein drittes Signal-Rausch-Verhältnis; und

Ausführen eines entsprechenden Prozesses, bis eine M-te Kanalkapazität oder ein M-tes Signal-Rausch-Verhältnis erhalten wird, Auswählen von Antennenzuständen, die den ersten Antennen entsprechen, wenn eine Kanalkapazität oder ein Signal-Rausch-Verhältnis aus den Kanalkapazitäten oder aus den Signal-Rausch-Verhältnissen maximal ist, um die Gruppe von optimalen Antennenzuständen zu bilden, wobei M eine Anzahl der ersten Antennen ist und M eine ganze Zahl größer als 1 ist; wobei der Pilotort ein Pilotort in dem Sender ist.

5. Verfahren nach Anspruch 4, wobei das Empfangen eines Pilotsignals und festgelegter Antennenzustandsinformationen und eines Pilotorts, die von einer ersten Antenne stammen und die dem Pilotsignal entsprechen, wobei das Pilotsignal, die festgelegten Antennenzustandsinformationen und der Pilotort von einem festgelegten Ressourcenort von jeder ersten Antenne in einem festgelegten Antennenzustand gesendet werden, umfasst:
Empfangen des Pilotsignals und einer Sequenzanzahl, die aus den festgelegten Antennenzustandsinformationen und dem Pilotort kombiniert wird, die jedem Pilotsignal entsprechen, wobei das Pilotsignal und die Sequenzanzahl von dem festgelegten Ressourcenort von jeder ersten Antenne in dem festgelegten Antennenzustand gesendet werden, und wobei der Empfänger die Sequenzanzahl, die aus den festgelegten Antennenzustandsinformationen und dem Pilotort kombiniert wird, die jedem Pilotsignal entsprechen, vorab speichert.

6. Verfahren nach Anspruch 4 oder 5, wobei das Verfahren vor dem Berechnen einer Kanalkapazität oder eines Signal-Rausch-Verhältnisses gemäß den empfangenen festgelegten Antennenzustandsinformationen und gemäß dem Pilotort, die von der ersten Antenne stammen und die jedem Pilotsignal entsprechen, außerdem umfasst: Speichern festgelegter Antennenzustandsinformationen und eines Pilotorts, die jedes Mal empfangen werden, die von der ersten Antenne stammen und die jedem Pilotsignal entsprechen, als eine Gruppe, bis eine Anzahl Q der verschiedenen Gruppen größer als oder gleich L ist, wobei L = $M^N$ ist, M eine Anzahl der ersten Antennen ist und N eine Anzahl der festgelegten Antennenzustandsinformationen und der Pilotorte ist, die jeder ersten Antenne entsprechen.

7. Verfahren nach einem der Ansprüche 4 bis 6, wobei das Empfangen eines Pilotsignals, das von einem festgelegten Ressourcenort von jeder ersten Antenne in einem festgelegten Antennenzustand gesendet wird, umfasst:

jeweiliges Empfangen des Pilotsignals, das von dem Sender gesendet wird, an einem festgelegten Ressourcenort, der einem Pilotkanal entspricht, wobei der Pilotkanal ein Kanal zum Senden einer neukonfigurierbaren MIMO-Einstellung ist; oder
jeweiliges Empfangen des Pilotsignals, das von dem Sender gesendet wird, an einem festgelegten Ressourcenort, der einem gemeinsamen Pilotkanal eines gemeinsamen Kanals entspricht; oder
jeweiliges Empfangen des Pilotsignals, das von dem Sender gesendet wird, an einem festgelegten Ressourcenort, der einem zweckbestimmten Pilotkanal eines zweckbestimmten Kanals entspricht.

8. System mit Mehrfachempfangs- und -sendeantennen (Multiple-Input Multiple-Output system, MIMO-System), das einen Empfänger und einen Sender aufweist, wobei der Sender umfasst:

mindestens zwei neu konfigurierbare erste Antenneneinheiten, die ein Senden mithilfe von Mehrfachempfangs- und -sendeantennen (MIMO) ausführen und die jeweils konfiguriert sind zum Senden eines Pilotsignals, festgelegter Antennenzustandsinformationen und eines Pilotorts, die dem Pilotsignal entsprechen, von einem festgelegten Ressourcenort an den Empfänger gemäß einem entsprechenden festgelegten Antennenzustand, sodass der Empfänger gemäß den festgelegten Antennenzustandsinformationen und gemäß dem Pilotort eine Gruppe von optimalen Antennenzuständen, die einer maximalen Kanalkapazität entsprechen, oder eine Gruppe von optimalen Antennenzuständen ermittelt, die einem maximalen Signal-Rausch-Verhältnis entsprechen, wobei die Gruppe von optimalen Antennenzuständen verwendet wird, um einen Antennenzustand von jeder ersten Antenne anzuzeigen, und
wobei die ersten Antenneneinheiten jeweils außerdem konfiguriert sind zum Empfangen der Gruppe von optimalen Antennenzuständen, die von dem Empfänger zurückgemeldet wird; und
eine Verarbeitungseinheit, die konfiguriert ist zum entsprechenden Anpassen eines Antennenzustands von jeder ersten Antenne gemäß dem Antennenzustand von jeder ersten Antenne, der durch die Gruppe von optimalen Antennenzuständen angezeigt wird, sodass jede erste Antenne ein Datenpaket an den Empfänger gemäß dem Antennenzustand in der Gruppe von optimalen Antennenzuständen sendet,
wobei die festgelegten Antennenzustandsinformationen und der Pilotort dem Pilotsignal entsprechen,
**dadurch gekennzeichnet, dass** der Empfänger insbesondere konfiguriert ist zum Berechnen einer Kanalkapazität bzw. eines Signal-Rausch-Verhältnisses aufgrund dessen, ob die Gruppe von optimalen Antennenzuständen, die der maximalen Kanalkapazität entsprechen oder dem maximalen Signal-Rausch-Verhältnis entsprechen, ermittelt wird,
indem festgelegte Antennenzustandsinformationen und ein Pilotort verwendet werden, die von jeder ersten Antenne in einem gleichen festgelegten Antennenzustand stammen, und Ermitteln einer erhaltenen Kanalkapazität oder eines erhaltenen Signal-Rausch-Verhältnisses, die einen maximalen Wert aufweisen, als eine erste Kanalkapazität oder ein erstes Signal-Rausch-Verhältnis, wobei ein Antennenzustand, welcher der ersten Kanalkapazität oder dem ersten Signal-Rausch-Verhältnis entspricht, ein erster festgelegter Antennenzustand ist;

durch ein Verwenden des ersten festgelegten Antennenzustands als einen Antennenzustand einer ersten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine zweite Kanalkapazität oder ein zweites Signal-Rausch-Verhältnis; durch ein Verwenden des ersten festgelegten Antennenzustands als einen Antennenzustand einer zweiten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine dritte Kanalkapazität oder ein drittes Signal-Rausch-Verhältnis; und Ausführen eines entsprechenden Prozesses, bis eine M-te Kanalkapazität oder ein M-tes Signal-Rausch-Verhältnis erhalten wird, Auswählen von Antennenzuständen, die den ersten Antennen entsprechen, wenn eine Kanalkapazität oder ein Signal-Rausch-Verhältnis aus den Kanalkapazitäten oder aus den Signal-Rausch-Verhältnissen maximal ist, um die Gruppe von optimalen Antennenzuständen zu bilden, wobei M eine Anzahl der ersten Antennen ist und M eine ganze Zahl größer als 1 ist; wobei der Pilotort ein Pilotort in dem Sender ist.

9. MIMO-System nach Anspruch 8, wobei die ersten Antenneneinheiten jeweils konfiguriert sind zum Senden des Pilotsignals und einer Sequenzanzahl, die aus den festgelegten Antennenzustandsinformationen und dem Pilotort kombiniert wird, die jedem Pilotsignal entsprechen, von dem festgelegten Ressourcenort an den Empfänger gemäß dem entsprechenden festgelegten Antennenzustand, wobei der Sender die Sequenzanzahl, die aus den festgelegten Antennenzustandsinformationen und dem Pilotort kombiniert wird, die jedem Pilotsignal entsprechen, vorab speichert.

10. MIMO-System nach Anspruch 8 oder 9, wobei wobei die ersten Antenneneinheiten jeweils insbesondere konfiguriert sind zum Senden des Pilotsignals von einem festgelegten Ressourcenort, der einem Pilotkanal entspricht, an den Empfänger gemäß dem entsprechenden festgelegten Antennenzustand, wobei der Pilotkanal ein Kanal zum Senden einer neukonfigurierbaren MIMO-Einstellung ist; oder wobei die ersten Antenneneinheiten jeweils insbesondere konfiguriert sind zum Senden des Pilotsignals von einem Ressourcenort, der einem gemeinsamen Pilotkanal eines gemeinsamen Kanals entspricht, an den Empfänger gemäß dem entsprechenden festgelegten Antennenzustand; oder wobei die ersten Antenneneinheiten jeweils insbesondere konfiguriert sind zum Senden des Pilotsignals von einem Ressourcenort, der einem zweckbestimmten Pilotkanal eines zweckbestimmten Kanals entspricht, an den Empfänger gemäß dem entsprechenden festgelegten Antennenzustand, wobei der entsprechende festgelegte anfängliche Antennenzustand ein zufällig ausgewählter Antennenzustand oder ein Langzeitantennenzustand der ersten Antenne ist.

11. Empfänger, umfassend:

mindestens zwei zweite Antenneneinheiten, die ein Senden mithilfe von Mehrfachempfangs- und -sendeantennen (MIMO) ausführen und die jeweils konfiguriert sind zum Empfangen eines Pilotsignals, festgelegter Antennenzustandsinformationen und eines Pilotorts, die von einer neukonfigurierbaren ersten Antenneneinheit stammen, wobei das Pilotsignal, die festgelegten Antennenzustandsinformationen und der Pilotort von einem festgelegten Ressourcenort von jeder ersten Antenneneinheit in einem festgelegten Antennenzustand gesendet werden; und eine Verarbeitungseinheit, die konfiguriert ist zum Berechnen einer Kanalkapazität oder eines Signal-Rausch-Verhältnisses gemäß den empfangenen festgelegten Antennenzustandsinformationen und gemäß dem Pilotort, die von der ersten Antenne stammen und die jedem Pilotsignal entsprechen, um eine Gruppe von optimalen Antennenzuständen, die einer maximalen Kanalkapazität entsprechen, oder eine Gruppe von optimalen Antennenzuständen zu erhalten, die einem maximalen Signal-Rausch-Verhältnis entsprechen, wobei die Gruppe von Antennenzuständen verwendet wird, um einen Antennenzustand von jeder ersten Antenne anzuzeigen, und wobei die zweiten Antenneneinheiten jeweils außerdem konfiguriert sind zum Rückmelden der erhaltenen Gruppe von optimalen Antennenzuständen an einen Sender, sodass der Sender jeweils einen Antennenzustand von jeder ersten Antenne anpasst, der durch die Gruppe von optimalen Antennenzuständen angezeigt wird, wobei die festgelegten Antennenzustandsinformationen und der Pilotort dem Pilotsignal entsprechen, **dadurch gekennzeichnet, dass**

die Verarbeitungseinheit insbesondere konfiguriert ist zum:

Berechnen einer Kanalkapazität bzw. eines Signal-Rausch-Verhältnisses aufgrund dessen, ob die Gruppe von optimalen Antennenzuständen, die der maximalen Kanalkapazität oder dem maximalen Signal-Rausch-Verhältnis entsprechen, erhalten wird, indem festgelegte Antennenzustandsinformationen und ein Pilotort verwendet werden, die von jeder ersten Antenne in einem gleichen festgelegten Antennenzustand stammen, und

Ermitteln einer erhaltenen Kanalkapazität oder eines erhaltenen Signal-Rausch-Verhältnisses, die einen maximalen Wert aufweisen, als eine erste Kanalkapazität oder ein erstes Signal-Rausch-Verhältnis, wobei ein Antennenzustand, welcher der ersten Kanalkapazität oder dem ersten Signal-Rausch-Verhältnis entspricht, ein erster festgelegter Antennenzustand ist;

durch ein Verwenden des ersten festgelegten Antennenzustands als einen Antennenzustand einer ersten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine zweite Kanalkapazität oder ein zweites Signal-Rausch-Verhältnis;

durch ein Verwenden des ersten festgelegten Antennenzustands als einen Antennenzustand einer zweiten ersten Antenne, Durchlaufen von Informationen über alle anderen ersten Antennen in ihren Antennenzuständen, Berechnen von Kanalkapazitäten oder Signal-Rausch-Verhältnissen und Ermitteln einer erhaltenen Kanalkapazität oder eines erhaltenen Signal-Rausch-Verhältnisses, die einen maximalen Wert aufweisen, als eine dritte Kanalkapazität oder ein drittes Signal-Rausch-Verhältnis; und

Ausführen eines entsprechenden Prozesses, bis eine M-te Kanalkapazität oder ein M-tes Signal-Rausch-Verhältnis erhalten wird, Auswählen von Antennenzuständen, die den ersten Antennen entsprechen, wenn eine Kanalkapazität oder ein Signal-Rausch-Verhältnis aus den Kanalkapazitäten oder aus den Signal-Rausch-Verhältnissen maximal ist, um die Gruppe von optimalen Antennenzuständen zu bilden, wobei M eine Anzahl der ersten Antennen ist und M eine ganze Zahl größer als 1 ist; wobei der Pilotort ein Pilotort in dem Sender ist.

12. Empfänger nach Anspruch 11, wobei die zweiten Antenneneinheiten jeweils konfiguriert sind zum Empfangen des Pilotsignals und einer Sequenzanzahl, die aus den festgelegten Antennenzustandsinformationen und dem Pilotort kombiniert wird, die jedem Pilotsignal entsprechen, wobei das Pilotsignal und die Sequenzanzahl an einem festgelegten Ressourcenort von jeder ersten Antenne in einem festgelegten Antennenzustand gesendet werden, und wobei der Empfänger die Sequenzanzahl, die aus den festgelegten Antennenzustandsinformationen und dem Pilotort kombiniert wird, die jedem Pilotsignal entsprechen, vorab speichert.

13. Empfänger nach Anspruch 11 oder 12, wobei:

die zweiten Antenneneinheiten jeweils insbesondere konfiguriert sind zum Empfangen des Pilotsignals, das von dem Sender gesendet wird, an einem festgelegten Ressourcenort, der einem Pilotkanal entspricht, wobei der Pilotkanal ein Kanal zum Senden einer neukonfigurierbaren MIMO-Einstellung ist; oder

die zweiten Antenneneinheiten jeweils insbesondere konfiguriert sind zum Empfangen des Pilotsignals, das von dem Sender gesendet wird, an einem festgelegten Ressourcenort, der einem gemeinsamen Pilotkanal eines gemeinsamen Kanals entspricht; oder

die zweiten Antenneneinheiten jeweils insbesondere konfiguriert sind zum Empfangen des Pilotsignals, das von dem Sender gesendet wird, an einem festgelegten Ressourcenort, der einem zweckbestimmten Pilotkanal eines zweckbestimmten Kanals entspricht.

**Revendications**

1. Procédé de transmission à entrées multiples et à sorties multiples (MIMO), pouvant être appliqué à un émetteur qui comprend au moins deux premières antennes reconfigurables effectuant une transmission en utilisant MIMO et consistant :

à envoyer chacune, sur un emplacement de ressources spécifié, un signal pilote, des informations d'état d'antenne spécifiées et un emplacement de pilote à un récepteur en fonction d'un état d'antenne spécifié respectif de telle sorte que le récepteur détermine, en fonction des informations d'état d'antenne spécifiées et de l'emplacement de pilote, un ensemble d'états d'antenne optimaux correspondant à une capacité de canal maximale ou un ensemble d'états d'antenne optimaux correspondant à un rapport signal sur bruit maximal, dans lequel l'ensemble d'états d'antenne optimaux est utilisé pour indiquer un état d'antenne de chaque première antenne ;

à recevoir l'ensemble d'états d'antenne optimaux renvoyé par le récepteur ; et

à ajuster de manière correspondante un état d'antenne de chaque première antenne en fonction de l'état d'antenne de chaque première antenne qui est indiqué par l'ensemble d'états d'antenne optimaux de telle sorte que chaque première antenne envoie un paquet de données au récepteur en fonction de l'état d'antenne dans l'ensemble d'états d'antenne optimaux,

où les informations d'état d'antenne spécifiées et l'emplacement de pilote correspondent au signal pilote,

**caractérisé en ce que** :

la détermination, au niveau du récepteur, de l'ensemble d'états d'antenne optimaux correspondant à une capacité de canal maximale ou au rapport signal sur bruit maximal respectivement consiste

à calculer une capacité de canal ou un rapport signal sur bruit en utilisant des informations d'état d'antenne spécifiées et un emplacement de pilote qui émanent de chaque première antenne dans un même état d'antenne spécifié et à déterminer une capacité de canal obtenue ou un rapport signal sur bruit obtenu ayant la valeur maximale comme étant une première capacité de canal ou un premier rapport signal sur bruit, dans lequel un état d'antenne correspondant à la première capacité de canal ou au premier rapport signal sur bruit est un premier état d'antenne spécifié ;

en utilisant le premier état d'antenne spécifié comme état d'antenne d'une première première antenne, à faire passer des informations concernant toutes les autres premières antennes dans des états d'antenne, à calculer des capacités de canal ou des rapports signal sur bruit et à déterminer une capacité de canal obtenue ou un rapport signal sur bruit obtenu ayant la valeur maximale comme étant une deuxième capacité de canal ou un deuxième rapport signal sur bruit ;

en utilisant le premier état d'antenne spécifié comme état d'antenne d'une seconde première antenne, à faire passer des informations concernant toutes les autres premières antennes dans des états d'antenne, à calculer des capacités de canal ou des rapports signal sur bruit et à déterminer une capacité de canal obtenue ou un rapport signal sur bruit obtenu ayant la valeur maximale comme étant une troisième capacité de canal ou un troisième rapport signal sur bruit ; et

à effectuer un processus correspondant jusqu'à ce qu'une $M^{ième}$ capacité de canal soit obtenue ou qu'un $M^{ième}$ rapport signal sur bruit soit obtenu, à sélectionner des états d'antenne qui correspondent aux premières antennes lorsqu'une capacité de canal est maximale ou qu'un rapport signal sur bruit est maximal dans M capacités de canal ou dans M rapports signal sur bruit pour former l'ensemble d'états d'antenne optimaux,

dans lequel M est une quantité de premières antennes et M est un nombre entier supérieur à 1 ;

dans lequel l'emplacement de pilote est un emplacement de pilote au niveau de l'émetteur.

**2.** Procédé selon la revendication 1, dans lequel le fait que chacune envoie, sur un emplacement de ressources spécifié, un signal pilote et des informations d'état d'antenne spécifiées et un emplacement de pilote qui correspondent au signal pilote, à un récepteur en fonction d'un état d'antenne spécifié respectif, consiste :

à envoyer chacune, sur l'emplacement de ressources spécifié, le signal pilote et un numéro de séquence combiné à partir des informations d'état d'antenne spécifiées et de l'emplacement de pilote qui correspondent à chaque signal pilote, au récepteur en fonction de l'état d'antenne spécifié respectif, dans lequel l'émetteur préstocke le numéro de séquence combiné à partir des informations d'état d'antenne spécifiées et de l'emplacement de pilote qui correspondent à chaque signal pilote.

**3.** Procédé selon la revendication 1 ou 2, dans lequel le fait que chacune envoie, sur un emplacement de ressources spécifié, un signal pilote à un récepteur en fonction d'un état d'antenne spécifié respectif, consiste :

à envoyer chacune, sur un emplacement de ressources spécifié correspondant à un canal pilote, le signal pilote au récepteur en fonction de l'état d'antenne spécifié respectif, dans lequel le canal pilote est un canal pour transmettre un réglage MIMO reconfigurable ; ou

à envoyer chacune, sur un emplacement de ressources correspondant à un canal pilote commun d'un canal commun, le signal pilote au récepteur en fonction de l'état d'antenne spécifié respectif ; ou

à envoyer chacune, sur un emplacement de ressources correspondant à un canal pilote dédié d'un canal dédié, le signal pilote au récepteur en fonction de l'état d'antenne spécifié respectif, dans lequel l'état d'antenne initial spécifié respectif est un état d'antenne sélectionné de manière aléatoire ou un état d'antenne historique de la première antenne.

4. Procédé de transmission à entrées multiples et à sorties multiples (MIMO), pouvant être appliqué à un récepteur qui comprend au moins deux secondes antennes effectuant une transmission en utilisant MIMO et consistant :

à recevoir un signal pilote, des informations d'état d'antenne spécifiées et un emplacement de pilote qui émanent d'une première antenne reconfigurable, dans lequel le signal pilote, les informations d'état d'antenne spécifiées et l'emplacement de pilote sont envoyés sur un emplacement de ressources spécifié par chaque première antenne dans un état d'antenne spécifié ;

à calculer une capacité de canal ou un rapport signal sur bruit en fonction des informations d'état d'antenne spécifiées reçues et de l'emplacement de pilote qui émanent de la première antenne et qui correspondent à chaque signal pilote, pour obtenir un ensemble d'états d'antenne optimaux correspondant à une capacité de canal maximale ou un ensemble d'états d'antenne optimaux correspondant à un rapport signal sur bruit maximal, dans lequel l'ensemble d'états d'antenne est utilisé pour indiquer un état de chaque première antenne ; et

à renvoyer l'ensemble d'états d'antenne optimaux obtenu à un émetteur de telle sorte que l'émetteur ajuste de manière correspondante un état d'antenne de chaque première antenne en fonction de l'état d'antenne de chaque première antenne qui est indiqué par l'ensemble d'états d'antenne optimaux ;

où les informations d'état d'antenne spécifiées et l'emplacement de pilote correspondent au signal pilote,

**caractérisé en ce que**

le calcul d'une capacité de canal ou d'un rapport signal sur bruit en fonction des informations d'état d'antenne spécifiées reçues et de l'emplacement de pilote qui émanent de la première antenne et qui correspondent à chaque signal pilote, pour obtenir un ensemble d'états d'antenne optimaux correspondant à une capacité de canal maximale ou à un rapport signal sur bruit maximal consiste :

à calculer une capacité de canal ou un rapport signal sur bruit en utilisant des informations d'état d'antenne spécifiées et un emplacement de pilote qui émanent de chaque première antenne dans un même état d'antenne spécifié, et à déterminer une capacité de canal obtenue ou un rapport signal sur bruit obtenu ayant la valeur maximale comme étant une première capacité de canal ou un premier rapport signal sur bruit, dans lequel un état d'antenne correspondant à la première capacité de canal ou au premier rapport signal sur bruit est un premier état d'antenne spécifié ;

en utilisant le premier état d'antenne spécifié comme état d'antenne d'une première première antenne, à faire passer des informations concernant toutes les autres premières antennes dans des états, à calculer des capacités de canal ou des rapports signal sur bruit et à déterminer une capacité de canal obtenue ou un rapport signal sur bruit obtenu ayant la valeur maximale comme étant une deuxième capacité de canal ou un deuxième rapport signal sur bruit ;

en utilisant le premier état d'antenne spécifié comme état d'antenne d'une seconde première antenne, à faire passer des informations concernant toutes les autres premières antennes dans des états, à calculer des capacités de canal ou des rapports signal sur bruit et à déterminer une capacité de canal obtenue ou un rapport signal sur bruit obtenu ayant la valeur maximale comme étant une troisième capacité de canal ou un troisième rapport signal sur bruit ; et

à effectuer un processus correspondant jusqu'à ce qu'une M$^{ième}$ capacité de canal soit obtenue ou qu'un M$^{ième}$ rapport signal sur bruit soit obtenu, à sélectionner des états d'antenne qui correspondent aux premières antennes lorsqu'une capacité de canal est maximale ou qu'un rapport signal sur bruit est maximal dans M capacités de canal ou dans M rapports signal sur bruit pour former l'ensemble d'états d'antenne optimaux,

dans lequel M est une quantité de premières antennes et M est un nombre entier supérieur à 1 ;

dans lequel l'emplacement de pilote est un emplacement de pilote au niveau de l'émetteur.

5. Procédé selon la revendication 4, dans lequel la réception d'un signal pilote et d'informations d'état d'antenne spécifiées et d'un emplacement de pilote qui émanent d'une première antenne et qui correspondent au signal pilote, dans lequel le signal pilote, les informations d'état d'antenne spécifiées et l'emplacement de pilote sont envoyés sur un emplacement de ressources spécifié par chaque première antenne dans un état d'antenne spécifié consiste :
à recevoir le signal pilote et un numéro de séquence combiné à partir des informations d'état d'antenne spécifiées et de l'emplacement de pilote qui correspondent à chaque signal pilote, dans lequel le signal pilote et le numéro de séquence sont envoyés sur l'emplacement de ressources spécifié par chaque première antenne dans l'état d'antenne spécifié et le récepteur préstocke le numéro de séquence combiné à partir des informations d'état d'antenne spécifiées et de l'emplacement de pilote qui correspondent à chaque signal pilote.

6. Procédé selon la revendication 4 ou 5, avant le calcul d'une capacité de canal ou d'un rapport signal sur bruit en fonction des informations d'état d'antenne spécifiées reçues et de l'emplacement de pilote qui émanent de la première antenne et qui correspondent à chaque signal pilote, consistant en outre :
à stocker des informations d'état d'antenne spécifiées et un emplacement de pilote qui sont reçus chaque fois, qui émanent de la première antenne et qui correspondent à chaque signal pilote sous la forme d'un groupe, jusqu'à ce qu'une quantité Q de différents groupes soit supérieure ou égale à L, dans lequel $L = M^N$, M est une quantité des premières antennes et N est une quantité d'informations d'état d'antenne spécifiées et des emplacements de pilote qui correspondent à chaque première antenne.

7. Procédé selon l'une quelconque des revendications 4 à 6, dans lequel la réception d'un signal pilote qui est envoyé sur un emplacement de ressources spécifié par chaque première antenne dans un état d'antenne spécifié consiste :

à recevoir chacune, sur un emplacement de ressources spécifié correspondant à un canal pilote, le signal pilote envoyé par l'émetteur, dans lequel le canal pilote est un canal pour transmettre un réglage MIMO reconfigurable ; ou
à recevoir chacune, sur un emplacement de ressources correspondant à un canal pilote commun d'un canal commun, le signal pilote envoyé par l'émetteur ; ou
à recevoir chacune, sur un emplacement de ressources correspondant à un canal pilote dédié d'un canal dédié, le signal pilote envoyé par l'émetteur.

8. Système de transmission à entrées multiples et à sorties multiples (MIMO) ayant un récepteur et un émetteur,
l'émetteur comprenant :

au moins deux premières unités d'antenne reconfigurables effectuant une transmission en utilisant de multiples entrées et de multiples sorties (MIMO), chacune étant configurée pour envoyer, sur un emplacement de ressources spécifié, un signal pilote, des informations d'état d'antenne spécifiées et un emplacement de pilote qui correspondent au signal pilote, au récepteur en fonction d'un état d'antenne spécifié respectif de telle sorte que le récepteur détermine, en fonction des informations d'état d'antenne spécifiées et de l'emplacement de pilote, un ensemble d'états d'antenne optimaux correspondant à une capacité de canal maximale ou un ensemble d'états d'antenne optimaux correspondant à un rapport signal sur bruit maximal, dans lequel l'ensemble d'états d'antenne optimaux est utilisé pour indiquer un état d'antenne de chaque première antenne, et
les premières unités d'antenne sont chacune en outre configurées pour recevoir l'ensemble d'états d'antenne optimaux renvoyé par le récepteur ; et
une unité de traitement, configurée pour ajuster de manière correspondante un état d'antenne de chaque première antenne en fonction de l'état d'antenne de chaque première antenne qui est indiqué par l'ensemble d'états d'antenne optimaux de telle sorte que chaque première antenne envoie un paquet de données au récepteur en fonction de l'état d'antenne dans l'ensemble d'états d'antenne optimaux,
où les informations d'état d'antenne spécifiées et l'emplacement de pilote correspondent au signal pilote,
**caractérisé en ce que** le récepteur est spécialement configuré pour calculer une capacité de canal ou un rapport signal sur bruit, respectivement, selon le fait que que l'ensemble d'états d'antenne optimaux correspond à la capacité de canal maximale ou correspond au rapport signal sur bruit maximal est déterminé ou non, en utilisant des informations d'état d'antenne spécifiées et un emplacement de pilote qui émanent de chaque première antenne dans un même état d'antenne spécifié et pour déterminer une capacité de canal obtenue ou un rapport signal sur bruit obtenu ayant la valeur maximale comme étant une première capacité de canal ou un premier rapport signal sur bruit, dans lequel un état d'antenne correspondant à la première capacité de canal ou au premier rapport signal sur bruit est un premier état d'antenne spécifié ;
en utilisant le premier état d'antenne spécifié comme état d'antenne d'une première première antenne, pour faire passer des informations concernant toutes les autres premières antennes dans des états, pour calculer des capacités de canal ou des rapports signal sur bruit et pour déterminer une capacité de canal obtenue ou un rapport signal sur bruit obtenu ayant la valeur maximale comme étant une deuxième capacité de canal ou un deuxième rapport signal sur bruit ;

en utilisant le premier état d'antenne spécifié comme état d'antenne d'une seconde première antenne, pour faire passer des informations concernant toutes les autres premières antennes dans des états d'antenne, pour calculer des capacités de canal ou des rapports signal sur bruit et pour déterminer une capacité de canal obtenue ou un rapport signal sur bruit obtenu ayant la valeur maximale comme étant une troisième capacité de canal ou un troisième rapport signal sur bruit ; et

pour effectuer un processus correspondant jusqu'à ce qu'une M$^{ième}$ capacité de canal soit obtenue ou qu'un M$^{ième}$ rapport signal sur bruit soit obtenu, pour sélectionner des états d'antenne qui correspondent aux premières antennes lorsqu'une capacité de canal est maximale ou qu'un rapport signal sur bruit est maximal dans M capacités de canal ou dans M rapports signal sur bruit pour former l'ensemble d'états d'antenne optimaux, dans lequel M est une quantité de premières antennes et M est un nombre entier supérieur à 1 ;

dans lequel l'emplacement de pilote est un emplacement de pilote au niveau de l'émetteur.

**9.** Système MIMO selon la revendication 8, dans lequel les premières unités d'antenne sont chacune configurées pour envoyer, sur l'emplacement de ressources spécifié, le signal pilote et un numéro de séquence combiné à partir des informations d'état d'antenne spécifiées et de l'emplacement de pilote qui correspondent à chaque signal pilote, au récepteur en fonction de l'état d'antenne spécifié respectif, dans lequel l'émetteur préstocke le numéro de séquence combiné à partir des informations d'état d'antenne spécifiées et de l'emplacement de pilote qui correspondent à chaque signal pilote.

**10.** Système MIMO selon la revendication 8 ou 9, dans lequel

les premières unités d'antenne sont chacune spécialement configurées pour envoyer, sur un emplacement de ressources spécifié correspondant à un canal pilote, le signal pilote au récepteur en fonction de l'état d'antenne spécifié respectif, dans lequel le canal pilote est un canal pour transmettre un réglage MIMO reconfigurable ; ou les premières unités d'antenne sont chacune spécialement configurées pour envoyer, sur un emplacement de ressources correspondant à un canal pilote commun d'un canal commun, le signal pilote au récepteur en fonction de l'état d'antenne spécifié respectif ; ou

les premières unités d'antenne sont chacune spécialement configurées pour envoyer, sur un emplacement de ressources correspondant à un canal pilote dédié d'un canal dédié, le signal pilote au récepteur en fonction de l'état d'antenne spécifié respectif, dans lequel l'état d'antenne initial spécifié respectif est un état d'antenne sélectionné de manière aléatoire ou un état d'antenne historique de la première antenne.

**11.** Récepteur comprenant :

au moins deux secondes unités d'antenne effectuant une transmission en utilisant de multiples entrées et de multiples sorties (MIMO), chacune étant configurée pour recevoir un signal pilote, des informations d'état d'antenne spécifiées et un emplacement de pilote qui émanent d'une première unité d'antenne reconfigurable, dans lequel le signal pilote, les informations d'état d'antenne spécifiées et l'emplacement de pilote sont envoyés sur un emplacement de ressources spécifié par chaque première unité d'antenne dans un état d'antenne spécifié ; et

une unité de traitement, configurée pour calculer une capacité de canal ou un rapport signal sur bruit en fonction des informations d'état d'antenne spécifiées reçues et de l'emplacement de pilote qui émanent de la première antenne et qui correspondent à chaque signal pilote, pour obtenir un ensemble d'états d'antenne optimaux correspondant à une capacité de canal maximale ou un ensemble d'états d'antenne optimaux correspondant à un rapport signal sur bruit maximal, dans lequel l'ensemble d'états d'antenne est utilisé pour indiquer un état d'antenne de chaque première antenne, et

les secondes unités d'antenne sont chacune en outre configurées pour renvoyer l'ensemble d'états d'antenne optimaux obtenu à un émetteur de telle sorte que l'émetteur ajuste de manière correspondante un état d'antenne de chaque première antenne en fonction de l'état d'antenne de chaque première antenne qui est indiqué par l'ensemble d'états d'antenne optimaux, où les informations d'état d'antenne spécifiées et l'emplacement de pilote correspondent au signal pilote,

**caractérisé en ce que**

l'unité de traitement est spécialement configurée pour calculer une capacité de canal ou un rapport signal sur bruit, respectivement, selon le fait que que l'ensemble d'états d'antenne optimaux correspondant à la capacité de canal maximale ou correspondant au rapport signal sur bruit maximal est obtenu ou non,

en utilisant des informations d'état d'antenne spécifiées et un emplacement de pilote qui émanent de chaque première antenne dans un même état d'antenne spécifié, et pour déterminer une capacité de canal obtenue ou un rapport signal sur bruit obtenu ayant la valeur maximale comme étant une première capacité de canal ou un premier rapport signal sur bruit, dans lequel un état d'antenne correspondant à la première capacité de canal ou au premier rapport signal sur bruit est un premier état d'antenne spécifié ;

en utilisant le premier état d'antenne spécifié comme état d'antenne d'une première première antenne, pour faire passer des informations concernant toutes les autres premières antennes dans des états d'antenne, pour calculer des capacités de canal ou des rapports signal sur bruit et pour déterminer une capacité de canal obtenue ou un rapport signal sur bruit obtenu ayant la valeur maximale comme étant une deuxième capacité de canal ou un deuxième rapport signal sur bruit ;

en utilisant le premier état d'antenne spécifié comme état d'antenne d'une seconde première antenne, pour faire passer des informations concernant toutes les autres premières antennes dans des états, pour calculer des capacités de canal ou des rapports signal sur bruit et pour déterminer une capacité de canal obtenue ou un rapport signal sur bruit obtenu ayant la valeur maximale comme étant une troisième capacité de canal ou un troisième rapport signal sur bruit ; et

pour effectuer un processus correspondant jusqu'à ce qu'une $M^{ième}$ capacité de canal soit obtenue ou qu'un $M^{ième}$ rapport signal sur bruit soit obtenu, pour sélectionner des états d'antenne qui correspondent aux premières antennes lorsqu'une capacité de canal est maximale ou qu'un rapport signal sur bruit est maximal dans M capacités de canal ou dans M rapports signal sur bruit pour former l'ensemble d'états d'antenne optimaux, dans lequel M est une quantité de premières antennes et M est un nombre entier supérieur à 1 ;

dans lequel l'emplacement de pilote est un emplacement de pilote au niveau de l'émetteur.

12. Récepteur selon la revendication 11, dans lequel les secondes unités d'antenne sont chacune configurées pour recevoir le signal pilote et un numéro de séquence combiné à partir des informations d'état d'antenne spécifiées et de l'emplacement de pilote qui correspondent à chaque signal pilote, dans lequel le signal pilote et le numéro de séquence sont envoyés sur l'emplacement de ressources spécifié par chaque première antenne dans l'état d'antenne spécifié et le récepteur préstocke le numéro de séquence combiné à partir des informations d'état d'antenne spécifiées et de l'emplacement de pilote qui correspondent à chaque signal pilote.

13. Récepteur selon la revendication 11 ou 12, dans lequel
les secondes unités d'antenne sont chacune spécialement configurées pour recevoir, sur un emplacement de ressources spécifié correspondant à un canal pilote, le signal pilote envoyé par l'émetteur, dans lequel le canal pilote est un canal pour transmettre un réglage MIMO reconfigurable ; ou
les secondes unités d'antenne sont chacune spécialement configurées pour recevoir, sur un emplacement de ressources correspondant à un canal pilote commun d'un canal commun, le signal pilote envoyé par l'émetteur ; ou
les secondes unités d'antenne sont chacune spécialement configurées pour recevoir, sur un emplacement de ressources correspondant à un canal pilote dédié d'un canal dédié, le signal pilote envoyé par l'émetteur.

FIG. 1

FIG. 2

FIG. 3a

FIG. 3b

A transmitter sends, on a specified resource location, a pilot signal and specified state information and a pilot location that correspond to the pilot signal to a receiver according to a specified state of each first antenna — S101

The transmitter receives an optimal antenna state set fed back by the receiver — S102

The transmitter correspondingly adjusts a state of each first antenna according to a state of each first antenna that is indicated by the optimal antenna state set — S103

FIG. 4

A receiver receives, on a specified resource location, a pilot signal, and specified state information and a pilot location that are of a first antenna and that correspond to the pilot signal, where the pilot signal, the specified state information, and the pilot location are sent by each first antenna in a specified state — S201

The receiver calculates a channel capacity or a signal-to-noise ratio according to the received specified state information and pilot location that are of the first antenna and that correspond to each pilot signal, to obtain an antenna state set corresponding to a maximum channel capacity or an optimal antenna state set corresponding to a maximum signal-to-noise ratio, where the antenna state set is used to indicate a state of each first antenna — S202

The receiver feeds back the obtained optimal antenna state set to a transmitter, so that the transmitter correspondingly adjusts a state of each first antenna according to the state of each first antenna that is indicated by the optimal antenna state set — S203

FIG. 5

FIG. 6

FIG. 7

1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7693032 B2
- US 20100272204 A1

- WO 2014003384 A1

**Non-patent literature cited in the description**

- Performance of a reconfigurable antenna configuration selection scheme in a MIMO-OFDM system with modulation rate adaptation. **DAVID GONZALEZ et al.** MODELING AND OPTIMIZATION IN MOBILE, AD HOC AND WIRELESS NETWORKS (WIOPT), 2011 INTERNATIONAL SYMPOSIUM ON. IEEE, 09 May 2011, 307-313